# EUROPEAN PATENT APPLICATION

(11) **EP 4 068 605 A1**
(43) Date of publication of application: **05.10.2022**
(21) Application number: 20911208.5
(22) Date of filing: 18.12.2020
(51) Int. Cl.: H02M 3/155, H02J 7/00

(54) **TERMINAL, POWER SUPPLY METHOD THEREFOR, AND CHARGE AND DISCHARGE MANAGEMENT CIRCUIT**

(30) Priority: 03.01.2020 CN 202010006218; 13.04.2020 CN 202010286994
(71) Applicant: Huawei Technologies Co., Ltd., Shenzhen, Guangdong 518129, (CN)
(72) Inventor: LIU, Xinyu, Shenzhen, Guangdong 518129 (CN); ZHANG, Xialing, Shenzhen, Guangdong 518129 (CN); CHENG, Gang, Shenzhen, Guangdong 518129 (CN)
(74) Representative: Thun, Clemens
(86) International application number: PCT/CN2020/137581
(87) International publication number: WO 2021/135987

(57) **Abstract**

A terminal, a power supply method for the terminal, and a charging and discharging management circuit relate to the field of battery charging and discharging technologies. The terminal includes a load circuit (20), a battery (13), and a charging and discharging management circuit (14). The battery (13) is configured to supply a voltage to the load circuit (20). The charging and discharging management circuit (14) is coupled to the load circuit (20) and the battery (13). The charging and discharging management circuit (14) is configured to receive an input voltage, and charge the battery (13) after stepping down the input voltage. When the battery voltage is greater than a threshold voltage, the battery (13) supplies a voltage to the load circuit (20). When the battery voltage decreases to the threshold voltage, the charging and discharging management circuit (14) steps up the battery voltage, and outputs a stepped-up voltage to the load circuit (20). The threshold voltage is greater than a minimum working voltage of the load circuit.

## Description

This application claims priority to Chinese Patent Application No. 202010006218.3, filed with the China National Intellectual Property Administration on January 3, 2020 and entitled "BATTERY CHARGING AND DISCHARGING MANAGEMENT CIRCUIT AND DISCHARGING SWITCHING METHOD", and Chinese Patent Application No. 202010286994.3, filed with the China National Intellectual Property Administration on April 13, 2020 and entitled "TERMINAL, POWER SUPPLY METHOD FOR TERMINAL, AND CHARGING AND DISCHARGING MANAGEMENT CIRCUIT", which are incorporated herein by reference in their entireties.

### TECHNICAL FIELD

This application relates to the field of battery charging and discharging technologies, and in particular, to a terminal, a power supply method for the terminal, and a charging and discharging management circuit.

### BACKGROUND

Users have higher and higher requirements on standby time of terminals (such as mobile phones). A load circuit, a battery, and a battery management circuit are disposed in a terminal. The battery management circuit supplies a charging voltage VDD to the battery, and the battery supplies a voltage to the load circuit. When a battery voltage U_{O} of the battery is close to a minimum working voltage of the load circuit, the battery voltage U_{O} is insufficient to maintain normal working of the load circuit. Therefore, to avoid damage to the load circuit, a system of the terminal is automatically powered off.

However, in a low-temperature use environment or after the battery is aged, an equivalent impedance R of the battery increases, and consequently a voltage drop V_{R} based on the equivalent impedance of the battery increases when a same current flows through the battery. Because U_{O} = VDD - V_{R}, when the voltage drop V_{R} based on the equivalent impedance of the battery increases, the battery voltage U_{O} decreases, and consequently, an endurance capacity of the battery is insufficient. For example, in the low-temperature use environment or after the battery is aged, the battery voltage U_{O} is more likely to decrease to the minimum working voltage of the load circuit, which may cause a problem that an endurance capacity of the battery of the terminal is obviously insufficient.

### SUMMARY

Technical solutions of this application provide a terminal, a power supply method for the terminal, and a charging and discharging management circuit, to improve an endurance capability of a battery. For example, in a low-temperature use environment or after the battery is aged, a problem that an endurance capability of the battery of the terminal is insufficient may be mitigated.

According to a first aspect of the technical solutions of this application, a terminal is provided. The terminal includes a load circuit, a battery, and a charging and discharging management circuit. The battery is configured to supply a voltage to the load circuit. The charging and discharging management circuit is coupled to the load circuit and the battery. The charging and discharging management circuit is configured to receive an input voltage, and charge the battery after stepping down the input voltage. In addition, when a battery voltage of the battery is greater than a threshold voltage, the battery may supply a voltage to the load circuit by using the charging and discharging management circuit. When the battery voltage decreases to the threshold voltage, the charging and discharging management circuit steps up the battery voltage, and outputs a stepped-up voltage to the load circuit. The threshold voltage is greater than a minimum working voltage of the load circuit.

In conclusion, an external charging device may charge the battery by using a voltage conversion circuit. In addition, in a normal-temperature environment or when the battery is not aged, the battery voltage of the battery is usually greater than the threshold voltage of the battery. Because the threshold voltage is greater than the minimum working voltage of the load circuit, the battery may supply the voltage to the load circuit by using the charging and discharging management circuit. For example, the threshold voltage provided in the technical solutions of this application may be greater than the minimum working voltage of the load circuit. In a working process of the charging and discharging management circuit, any voltage greater than the minimum working voltage of the load circuit may be selected as the threshold voltage. When the load circuit includes a plurality of circuit modules, one of minimum working voltages of the circuit modules may serve as the minimum working voltage of the load circuit. Certainly, a minimum value of the minimum working voltages of the circuit modules may alternatively serve as the minimum working voltage of the load circuit. In addition, for example, when the terminal works in a low-temperature environment, or when the battery is in an aging state, an equivalent impedance of the battery increases, resulting in a decrease of the battery voltage. When the battery voltage decreases to the threshold voltage of the battery, if the battery voltage continues to be supplied to the load circuit, the load circuit may not work normally, and there may be a risk that the terminal is automatically powered off. To resolve the foregoing problem, in the technical solutions of this application, the charging and discharging management circuit in the terminal may further step up the battery voltage, and output the stepped-up voltage to the load circuit. This can ensure that the load circuit works normally. In this way, in the low-temperature environment and when the battery is aged, although the battery voltage decreases, under a step-up action of the charging and discharging management circuit, the stepped-up voltage can still drive the load circuit to work, thereby mitigating a problem that an endurance capability of the battery of the terminal is obviously insufficient in the low-temperature use environment or after the battery is aged.

In an implementation solution, the charging and discharging management circuit includes a first switch, a second switch, and a voltage conversion circuit. A first end of the first switch is coupled to the load circuit. The first switch is configured to be switched on when the battery voltage is greater than the threshold voltage, and the first switch is further configured to be switched off when the battery voltage decreases to the threshold voltage. A first end of the second switch is coupled to the load circuit. The second switch is configured to be switched off when the battery voltage is greater than the threshold voltage, and the second switch is further configured to be switched on when the battery voltage decreases to the threshold voltage. The voltage conversion circuit is coupled to the battery, a second end of the first switch, and a second end of the second switch. The voltage conversion circuit is configured to step down the input voltage to a first voltage, and output the first voltage to a battery, to charge the battery. When the battery voltage is greater than the threshold voltage, the battery supplies a voltage to the load circuit by using the voltage conversion circuit and the first switch. When the battery voltage decreases to the threshold voltage, the voltage conversion circuit is further configured to step up the battery voltage, and output a stepped-up voltage to the load circuit by using the second switch. In this way, when the terminal is coupled to the external charging device, the voltage conversion circuit may perform a voltage step-down operation, to step down a voltage supplied by the external charging device to the first voltage, and output the first voltage to the battery, to charge the battery. For example, in the normal-temperature environment or when the battery is not aged, the battery voltage of the battery is usually greater than the threshold voltage of the battery. In this case, the first switch may be switched on, the second switch may be switched off, and the battery may supply power to the load circuit by using the voltage conversion circuit and the switched-on first switch. When the terminal works in the low-temperature environment, or the battery is in an aging state, the battery voltage decreases to the foregoing threshold voltage. To avoid that the terminal is automatically powered off, the voltage conversion circuit may step up the battery voltage, to generate a second voltage. Then, the second switch is switched on. In this way, the second voltage is supplied to the load circuit for supply power by using the second switch, to ensure that the load circuit can work normally. In this case, the first switch is switched off, and the battery is disconnected from the load circuit.

In an implementation solution, the first switch includes a first transistor and a first diode. A gate of the first transistor is configured to receive a gating signal. A first electrode of the first transistor is coupled to the load circuit. A second electrode of the first transistor is coupled to the voltage conversion circuit. An anode of the first diode is coupled to the second electrode of the first transistor. A cathode of the first diode is coupled to the first electrode of the first transistor. The first diode may be a parasitic diode generated in a process of manufacturing the first transistor. Alternatively, the first diode may be a separately manufactured diode. The first switch includes one transistor and one diode, so that a structure of the first switch may be simple. In addition, the first switch may have a unidirectional switch-off function. In this way, when the first transistor is cut off under the control of the signal received by the gate of the first transistor, the first switch is not switched off immediately. The first switch is switched off only when a cathode voltage of the first diode is greater than an anode voltage. In this case, when the battery voltage decreases to the threshold voltage and the first transistor is in a cut-off state, the first switch is not switched off immediately. The first switch is switched off only when the voltage conversion circuit steps up the battery voltage and then transmits a stepped-up battery voltage to the load circuit by using the second switch, to enable the cathode voltage of the first diode in the first switch to be greater than the anode voltage. This avoids a phenomenon that the terminal is powered off because the voltage stepped up by the voltage conversion circuit is not transmitted to the load circuit in time.

In an implementation solution, the second switch includes a second transistor and a second diode. A gate of the second transistor is configured to receive a gating signal, a first electrode of the second transistor is coupled to the load circuit, and a second electrode of the second transistor is coupled to the voltage conversion circuit. An anode of the second diode is coupled to the first electrode of the second transistor. A cathode of the second diode is coupled to the second electrode of the second transistor. As described above, the second diode may be a parasitic diode generated in a process of manufacturing the second transistor. Alternatively, the second diode may be a separately manufactured diode. The second switch includes one transistor and one diode, so that a structure of the second switch may be simple.

In an implementation solution, the second switch further includes a third diode. An anode of the third diode is coupled to the second electrode of the second transistor. A cathode of the third diode is coupled to the cathode of the second diode. In addition, it can be learned from the foregoing that, the anode of the second diode is coupled to the first electrode of the second transistor. The second switch may have a bidirectional switch-off function. For example, when the second transistor is in a cut-off state, both the second diode and the third diode are in a cut-off state, and a current cannot be transmitted between the first electrode and the second electrode of the second transistor.

In an implementation solution, the voltage conversion circuit includes a third switch, a fourth switch, a fifth switch, a sixth switch, a first inductor, a first capacitor, a second capacitor, and a third capacitor. A gating end of the third switch is configured to receive a gating signal, a first end of the third switch is configured to receive the input voltage and is coupled to a first end of the first capacitor, and a second end of the third switch is coupled to a first end of the fourth switch, the second end of the second switch, and a first end of the second capacitor. A second end of the first capacitor and a second end of the second capacitor are grounded. A gating end of the fourth switch is configured to receive a gating signal, and a second end of the fourth switch is coupled to a first end of the first inductor. A second end of the first inductor is coupled to a first end of the fifth switch, the second end of the first switch, and a first end of the third capacitor, and a second end of the third capacitor is grounded. A gating end of the fifth switch is configured to receive a gating signal, and a second end of the fifth switch is coupled to the battery. A gating end of the sixth switch is configured to receive a gating signal, a first end of the sixth switch is coupled to the second end of the fourth switch, and a second end of the sixth switch is grounded. In this case, the first capacitor, the fourth switch, the sixth switch, the first inductor, and the third capacitor may form a buck circuit, so that a voltage of an input end of the voltage conversion circuit can be stepped down to the first voltage, to charge the battery. In addition, the first inductor, the fourth switch, the sixth switch, the second capacitor, and the third capacitor may form a boost circuit. In this way, the voltage conversion circuit completes a process of stepping up the battery voltage, so that the stepped-up voltage is transmitted to the load circuit by using the second switch.

In an implementation solution, the third switch includes a third transistor, a fourth diode, and a fifth diode. A gate of the third transistor is configured to receive a gating signal, a first electrode of the third transistor is configured to receive the input voltage, and a second electrode of the third transistor is coupled to the first end of the fourth switch and the second end of the second switch. An anode of the fourth diode is coupled to the first electrode of the third transistor. A cathode of the fourth diode is coupled to a cathode of the fifth diode. An anode of the fifth diode is coupled to the second electrode of the third transistor. In this case, the third switch may have a bidirectional switch-off function. When the third switch is switched off, conduction from a power supply inside the terminal to the external power supply may be prevented. In addition, in a process in which the voltage conversion circuit steps up the battery voltage and then transmits a stepped-up battery voltage to the load circuit by using the second switch, the external power supply is prevented from affecting the foregoing internal power supply process.

In an implementation solution, the voltage conversion circuit includes a low dropout regulator and a boost circuit. The low dropout regulator is coupled to the battery and the second end of the first switch. When the battery needs to be charged, the low dropout regulator is configured to step down the input voltage to the first voltage and output the first voltage to the battery. In addition, the first switch may be switched on, and the second switch may be switched off, so that the low dropout regulator can output the first voltage to the load circuit while charging the battery, to supply power to the load circuit at the same time. Furthermore, when the battery needs to supply power to the load circuit, the first switch may be switched on, and the second switch may be switched off. The battery supplies a voltage to the load circuit by using the low dropout regulator and the first switch. In addition, the boost circuit is coupled to the low dropout regulator and the second end of the second switch. When the terminal works in a low temperature state or the battery is aged, the boost circuit may step up the battery voltage, and when the second switch is switched on, output the stepped-up voltage to the load circuit by using the second switch.

In an implementation solution, the boost circuit includes a second inductor, a seventh switch, an eighth switch, a fourth capacitor, and a fifth capacitor. A first end of the second inductor is coupled to the low dropout regulator and a first end of the fourth capacitor, and a second end of the second inductor is coupled to a first end of the seventh switch. A second end of the seventh switch is coupled to the second end of the second switch and a first end of the fifth capacitor. A gating end of the seventh switch is configured to receive a gating signal. A second end of the fourth capacitor is grounded. A second end of the fifth capacitor is grounded. A gating end of the eighth switch is configured to receive a gating signal, a first end of the eighth switch is coupled to the second end of the second inductor, and a second end of the eighth switch is grounded. In a step-up process of the boost circuit, a pulse width modulation (PWM) signal may be used to control the seventh switch and the eighth switch to be alternately switched on, to step up a voltage between two ends of the fifth capacitor, so that a voltage at an output end of the boost circuit is greater than a voltage at an input end of the boost circuit.

In an implementation solution, the charging and discharging management circuit includes a low dropout regulator and a boost circuit. The low dropout regulator is coupled to the battery. The low dropout regulator is configured to step down the input voltage to a first voltage, and supply the first voltage to the battery. The boost circuit is coupled to the low dropout regulator and the load circuit. The boost circuit is configured to output the first voltage to the load circuit. When the battery voltage is greater than the threshold voltage, the boost circuit is further configured to output the battery voltage to the load circuit. When the battery voltage decreases to the threshold voltage, the boost circuit is further configured to step up the battery voltage output by the battery, and output a stepped-up voltage to the load circuit. In this way, in the low-temperature environment and when the battery is aged, although the battery voltage decreases, under a step-up action of a voltage conversion circuit, the stepped-up voltage can still drive the circuit to work, thereby mitigating a problem that an endurance capability of the battery of the terminal is obviously insufficient in the low-temperature use environment or after the battery is aged.

In an implementation solution, the boost circuit includes a second inductor, a seventh switch, an eighth switch, a fourth capacitor, and a fifth capacitor. A first end of the second inductor is coupled to the low dropout regulator and a first end of the fourth capacitor, and a second end of the second inductor is coupled to a first end of the seventh switch. A second end of the seventh switch is coupled to the load circuit and a first end of the fifth capacitor. A gating end of the seventh switch is configured to receive a gating signal. A second end of the fourth capacitor is grounded, and a second end of the fifth capacitor is grounded. A gating end of the eighth switch is configured to receive a gating signal, a first end of the eighth switch is coupled to the second end of the second inductor, and a second end of the eighth switch is grounded. When the low dropout regulator supplies the first voltage to the battery, the seventh switch may be switched on, and the eighth switch may be switched off. The low dropout regulator supplies the first voltage to the load circuit by using the seventh switch. In addition, when the battery voltage is greater than the threshold voltage, the seventh switch is switched on, and the eighth switch is switched off. The battery may supply power to the load circuit by using the low dropout regulator and the seventh switch. When the battery voltage decreases to the threshold voltage, the seventh switch and the eighth switch are alternately switched on, and the boost circuit performs a step-up process and supplies the stepped-up voltage to the load circuit. A technical effect of the boost circuit is the same as that described above. Details are not described herein again.

In an implementation solution, the load circuit includes a main control module and a detection module. The detection module is configured to detect an ambient temperature of the terminal. The main control module is configured to: when it is determined that the ambient temperature is lower than a preset temperature, determine whether the battery voltage decreases to the threshold voltage. Alternatively, the detection module is coupled to the battery, and is configured to detect a quantity of charging and discharging cycles of the battery. The main control module is configured to: when it is determined that the quantity of charging and discharging cycles is greater than a preset quantity of times, determine whether the battery voltage decreases to the threshold voltage. Whether the terminal works in a low-temperature environment is determined by detecting the ambient temperature of the terminal. In addition, whether the battery is aged may be determined by detecting the quantity of charging and discharging cycles of the battery. This is because when the terminal works in the low-temperature environment or when the battery is in an aging state, an equivalent impedance of the battery increases, resulting in a decrease of the battery voltage. Therefore, when the terminal is in the low-temperature environment or when the battery is aged, whether the battery voltage decreases to the threshold voltage is to be determined, without a need of determining a value of the battery voltage in real time. This helps reduce product power consumption.

In an implementation solution, the main control module is further configured to detect a discharge current of the battery when it is determined that the ambient temperature is lower than the preset temperature or the quantity of charging and discharging cycles is greater than the preset quantity of times; and when the discharge current is greater than or equal to a threshold current, the main control module determines whether the battery voltage decreases to the threshold voltage. The threshold current may be 0.01 C, and C indicates a capacity of the battery. When the terminal runs a relatively small program, the battery needs to supply a relatively small current to the load circuit. Therefore, a discharge current of the battery is relatively small. In this case, a voltage drop based on the equivalent impedance of the battery is also small, and has little impact on the battery voltage. Therefore, a voltage step-up function of the voltage conversion circuit may not need to be used. On the contrary, when the terminal runs a relatively large program, a discharge current of the battery is relatively large. A voltage drop based on the equivalent impedance of the battery is very large. Therefore, the battery voltage greatly decreases, and there is a case in which the battery voltage decreases to the threshold voltage. In this case, the voltage step-up function of the voltage conversion circuit needs to be used to supply power to the load circuit. In this way, before it is determined whether the battery voltage decreases to the threshold voltage, a current required by a program that is running on the terminal may be determined by determining whether the discharge current is greater than the threshold current. A voltage step-up function of the voltage conversion circuit needs to be started only when a running program requires a relatively large current, so that power consumption can be reduced.

In an implementation solution, the main control module is further configured to lower an undervoltage protection voltage of the battery when it is determined that the ambient temperature is lower than the preset temperature or the quantity of charging and discharging cycles is greater than the preset quantity of times, and the battery voltage decreases to the threshold voltage. The minimum working voltage of the load circuit is greater than a current discharge cut-off voltage of the battery. The current discharge cut-off voltage of the battery is greater than a lowered undervoltage protection voltage. The battery has a discharge cut-off voltage. When the battery voltage is less than the discharge cut-off voltage of the battery, to disconnect the battery from the load circuit and the voltage conversion circuit, and avoid damage to the battery, the battery may be further provided with the undervoltage protection voltage. The undervoltage protection voltage is less than the discharge cut-off voltage. In this case, when the battery voltage decreases to the undervoltage protection voltage, a protection board in the battery disconnects a cell from the load circuit and the voltage conversion circuit, to avoid further discharging of the cell. However, the discharge cut-off voltage decreases as a temperature decreases or an aging degree of the battery increases. Therefore, the undervoltage protection voltage of the battery needs to be lowered, so that it is possible that the battery discharges to obtain a lower discharge cut-off voltage, thereby avoiding that the terminal is powered off because the protection board disconnects the cell from the voltage conversion circuit.

In an implementation solution, the threshold voltage may be less than a rated voltage of the battery. In this way, in a working process of the charging and discharging management circuit, any voltage may be selected, as the threshold voltage, within a range from the minimum working voltage of the load circuit to the rated voltage of the battery. In this way, a threshold voltage range is limited to the range from the minimum working voltage of the load circuit to the rated voltage of the battery, so that the threshold voltage range can be narrowed down, and a probability that the voltage conversion circuit starts the step-up operation can be reduced. Therefore, power consumption is reduced.

According to a second aspect of the technical solutions of this application, a power supply method for a terminal is provided. The terminal includes a load circuit, a battery, and a voltage conversion circuit coupled to the load circuit and the battery. The method includes: The charging and discharging management circuit receives an input voltage, and charge the battery after stepping down the input voltage. When a battery voltage of the battery is greater than a threshold voltage, the battery supplies a voltage to the load circuit by using the charging and discharging management circuit. When the battery voltage decreases to the threshold voltage, the charging and discharging management circuit steps up the battery voltage, and outputs a stepped-up voltage to the load circuit. The foregoing power supply method for the terminal has the same technical effect as the terminal provided in the foregoing embodiment, and details are not described herein again.

According to a third aspect of the technical solutions of this application, a charging and discharging management circuit is provided. The charging and discharging management circuit is configured to receive an input voltage, and charge a battery after stepping down the input voltage. When a battery voltage of the battery is greater than a threshold voltage, the battery supplies a voltage to a load circuit by using the discharging management circuit. When the battery voltage decreases to the threshold voltage, the battery voltage is stepped up, and a stepped-up voltage is output to the load circuit. The threshold voltage is greater than a minimum working voltage of the load circuit. The charging and discharging management circuit has the same technical effect as the terminal provided in the foregoing embodiment, and details are not described herein again.

In an implementation solution, the charging and discharging management circuit includes a first switch, a second switch, and a voltage conversion circuit. A first end of the first switch is coupled to the load circuit. The first switch is configured to be switched on when the battery voltage is greater than the threshold voltage, and the first switch is further configured to be switched off when the battery voltage decreases to the threshold voltage. A first end of the second switch is coupled to the load circuit. The second switch is configured to be switched off when the battery voltage is greater than the threshold voltage, and the second switch is further configured to be switched on when the battery voltage decreases to the threshold voltage. The voltage conversion circuit is coupled to the battery, a second end of the first switch, and a second end of the second switch. The voltage conversion circuit is configured to step down the input voltage to a first voltage, and output the first voltage to a battery, to charge the battery. When the battery voltage is greater than the threshold voltage, the battery supplies a voltage to the load circuit by using the voltage conversion circuit and the first switch. When the battery voltage decreases to the threshold voltage, the voltage conversion circuit is further configured to step up the battery voltage, and output a stepped-up voltage to the load circuit by using the second switch. The first switch and the second switch have the same technical effects as those in the foregoing embodiment, and details are not described herein again.

In an implementation solution, the first switch includes a first transistor and a first diode. A gate of the first transistor is configured to receive a gating signal. A first electrode of the first transistor is coupled to the load circuit. A second electrode of the first transistor is coupled to the voltage conversion circuit. An anode of the first diode is coupled to the second electrode of the first transistor. A cathode of the first diode is coupled to the first electrode of the first transistor. The first transistor and the first diode have the same technical effects as those in the foregoing embodiment, and details are not described herein again.

In an implementation solution, the second switch includes a second transistor and a second diode. A gate of the second transistor is configured to receive a gating signal, a first electrode of the second transistor is coupled to the load circuit, and a second electrode of the second transistor is coupled to the voltage conversion circuit. An anode of the second diode is coupled to the first electrode of the second transistor. A cathode of the second diode is coupled to the second electrode of the second transistor. The second transistor and the second diode have the same technical effects as those in the foregoing embodiment, and details are not described herein again.

In an implementation solution, the voltage conversion circuit includes a third switch, a fourth switch, a fifth switch, a sixth switch, a first inductor, a first capacitor, a second capacitor, and a third capacitor. A gating end of the third switch is configured to receive a gating signal, a first end of the third switch is configured to receive the input voltage and is coupled to a first end of the first capacitor, and a second end of the third switch is coupled to a first end of the fourth switch, the second end of the second switch, and a first end of the second capacitor. A second end of the first capacitor and a second end of the second capacitor are grounded. A gating end of the fourth switch is configured to receive a gating signal, and a second end of the fourth switch is coupled to a first end of the first inductor. A second end of the first inductor is coupled to a first end of the fifth switch, the second end of the first switch, and a first end of the third capacitor, and a second end of the third capacitor is grounded. A gating end of the fifth switch is configured to receive a gating signal, and a second end of the fifth switch is coupled to the battery. A gating end of the sixth switch is configured to receive a gating signal, a first end of the sixth switch is coupled to the second end of the fourth switch, and a second end of the sixth switch is grounded. The voltage conversion circuit has a same technical effect as that in the foregoing embodiment, and details are not described herein again.

In an implementation solution, the third switch includes a third transistor, a fourth diode, and a fifth diode. A gate of the third transistor is configured to receive a gating signal, a first electrode of the third transistor is configured to receive the input voltage, and a second electrode of the third transistor is coupled to the first end of the fourth switch and the second end of the second switch. An anode of the fourth diode is coupled to the first electrode of the third transistor. A cathode of the fourth diode is coupled to a cathode of the fifth diode. An anode of the fifth diode is coupled to the second electrode of the third transistor. The third transistor, the fourth diode, and the fifth diode have the same technical effects as those in the foregoing embodiments, and details are not described herein again.

### BRIEF DESCRIPTION OF DRAWINGS

FIG. 1 is a schematic diagram of a structure of a terminal according to an embodiment of this application;
FIG. 2 is a schematic diagram of a structure in which the terminal shown in FIG. 1 is connected to an adapter and a data line;
FIG. 3 is a schematic diagram in which a charging and discharging management circuit is electrically connected to a load circuit and a battery according to an embodiment of this application;
FIG. 4a is a schematic diagram of power supply of the charging and discharging management circuit in FIG. 3;
FIG. 4b is another schematic diagram of power supply of the charging and discharging management circuit in FIG. 3;
FIG. 4c is another schematic diagram of power supply of the charging and discharging management circuit in FIG. 3;
FIG. 4d is another schematic diagram of power supply of the charging and discharging management circuit in FIG. 3;
FIG. 5a is a schematic diagram in which another charging and discharging management circuit is electrically connected to a load circuit and a battery according to an embodiment of this application;
FIG. 5b is a schematic diagram in which another charging and discharging management circuit is electrically connected to a load circuit and a battery according to an embodiment of this application;
FIG. 5c is a schematic diagram in which another charging and discharging management circuit is electrically connected to a load circuit and a battery according to an embodiment of this application;
FIG. 5d is a schematic diagram in which another charging and discharging management circuit is electrically connected to a load circuit and a battery according to an embodiment of this application;
FIG. 6a is a schematic diagram of power supply of the charging and discharging management circuit in FIG. 5a;
FIG. 6b is another schematic diagram of power supply of the charging and discharging management circuit in FIG. 5a;
FIG. 6c is another schematic diagram of power supply of the charging and discharging management circuit in FIG. 5a;
FIG. 7 shows a power supply method for a terminal according to an embodiment of this application;
FIG. 8 is a schematic diagram of a charging and discharging management chip according to an embodiment of this application;
FIG. 9 is a schematic diagram in which another charging and discharging management circuit is electrically connected to a load circuit and a battery according to an embodiment of this application;
FIG. 10 is a schematic diagram in which another charging and discharging management circuit is electrically connected to a load circuit and a battery according to an embodiment of this application;
FIG. 11a is a schematic diagram of power supply of the charging and discharging management circuit in FIG. 10;
FIG. 11b is a schematic diagram of power supply of the charging and discharging management circuit in FIG. 10;
FIG. 11c is a schematic diagram of power supply of the charging and discharging management circuit in FIG. 10; and
FIG. 12 is a schematic diagram in which another charging and discharging management circuit is electrically connected to a load circuit and a battery according to an embodiment of this application.

### Reference numerals:

01-terminal; 10-display panel; 11-middle frame; 111-bezel; 110-bearing plate; 12-housing; 13-battery; 14-charging and discharging management circuit; 15-connector; 02-adapter; 03-data line; 20-load circuit; 200-main control module; 201-detection module; 202-display module; 203-audio module; 204-radio frequency module; 205-baseband module; 30-voltage conversion circuit; 3 1-first switch; 32-second switch; 33-third switch; 34-fourth switch; 35-fifth switch; 36-sixth switch; 131-cell; 132-protection board; 04-charging and discharging management chip; 37-seventh switch; 38-eighth switch; 41-LDO; 42-boost circuit; 411-voltage stabilizing switch; and 412-battery control switch.

### DESCRIPTION OF EMBODIMENTS

The following describes the technical solutions in embodiments of this application with reference to accompanying drawings in embodiments of this application. It is clear that the described embodiments are merely a part rather than all of the embodiments of this application.

The following terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more of the features. In the descriptions of this application, unless otherwise specified, "a plurality of' means two or more.

In addition, in embodiments of this application, orientation terms such as "upper", "lower", "left", and "right" may be defined by, but are not limited to, orientations of components schematically placed in the accompanying drawings. It should be understood that these orientation terms may be relative concepts, are used for description and clarification of "relative to", and may be changed accordingly based on changes in placement orientations of the components in the accompanying drawing.

In embodiments of this application, unless otherwise clearly specified and limited, the term "connection" should be understood in a broad sense. For example, the "connection" may be a fixed connection, a detachable connection, or an integral connection, may be a direct connection, or may be an indirect connection through an intermediate medium. In addition, the term "coupling" may be a manner of an electrical connection for implementing signal and/or power transmission. The "coupling" may be a direct electrical connection, or may be an indirect electrical connection through an intermediate medium.

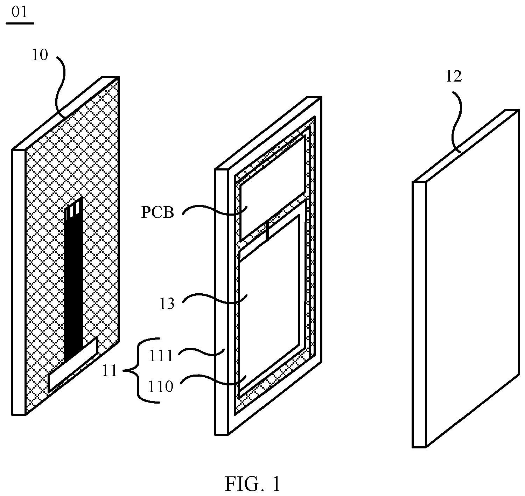

An embodiment of this application provides a terminal. The terminal includes an electronic product with a rechargeable battery, such as a mobile phone (mobile phone), a tablet computer (pad), a television, an intelligent wearable product (for example, a smartwatch or a smart band), a virtual reality (virtual reality, VR) terminal device, and an augmented reality (augmented reality, AR) terminal device. The terminal may alternatively be an electronic product such as a rechargeable electric vehicle, a small rechargeable household appliance (for example, a soy milk machine or a floor sweeping robot), or an uncrewed aerial vehicle. A specific form of the terminal is not specially limited in embodiments of this application. For ease of description, the following provides description by using an example in which the terminal 01 is a mobile phone shown in FIG. 1.

As shown in FIG. 1, the terminal 01 mainly includes a display panel (display panel, DP) 10. The display panel 10 may be a liquid crystal display (liquid crystal display, LCD) panel or an organic light-emitting diode (organic light-emitting diode, OLED) display panel. This is not limited in this application. In addition, the terminal 01 may further include a middle frame 11 and a housing 12 shown in FIG. 1. The display panel 10 and the housing 12 are respectively located on two sides of the middle frame 11, and a back of the display panel 10 faces the housing 12. The middle frame 11 may include a bearing plate 110 and a bezel 111 surrounding the bearing plate 110. A surface that is of the bearing plate 110 and that is close to a side of the housing 12 is used to dispose internal components such as a battery 13, a printed circuit board (printed circuit board, PCB), a camera (Camera), and an antenna. An enclosed space formed by the housing 12 and the middle frame 11 can protect the internal components.

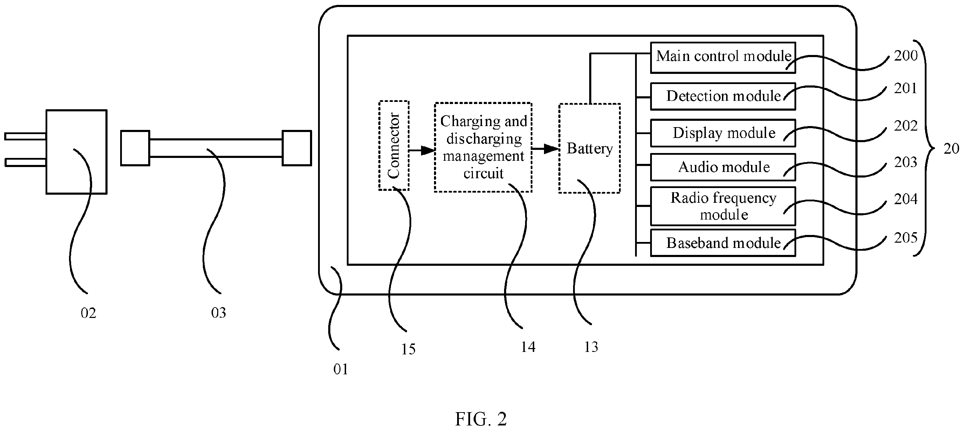

A load circuit 20 shown in FIG. 2 is disposed on the PCB. The load circuit 20 may include circuit modules, that are configured to perform different functions, such as one or more of a main control module 200 (for example, a processor), a detection module 201 (for example, an electricity metering chip, or a sensor such as a temperature sensor), a display module 202 (for example, a display panel), an audio module 203 (for example, a speaker, a microphone, and a codec chip), a radio frequency module 204 (for example, a radio frequency transceiver circuit), and a baseband module 205 (for example, a baseband processor). The display module 202 may be configured to control the display panel 10 to perform displaying. The audio module 203 is configured to process audio data. The radio frequency module 204 may be configured to send or receive a radio frequency signal. The baseband module 205 may be configured to send or receive a baseband signal.

When the detection module 201 is a temperature sensor, the detection module 201 may detect an ambient temperature of the terminal 01. Alternatively, when the detection module 201 is an electricity metering chip, the detection module 201 may be further coupled to the battery 13, and may detect a quantity of charging and discharging cycles of the battery 13, to obtain an aging degree of the battery. The main control module 200 may be coupled to the remaining circuit modules, and is configured to receive data of the circuit modules and perform data processing. The load circuit 20 may be coupled to the battery 13. A voltage supplied by the battery 13 may serve as a working voltage of each circuit module in the load circuit 20.

In addition, the terminal 01 further includes a charging and discharging management circuit 14 coupled to the battery 13 and a connector 15 coupled to the charging and discharging management circuit 14. After an adapter 02 outside the terminal 01 is coupled to the connector 15 through a data line 03, the adapter 02 may convert an alternating current of 220 V into a direct-current voltage (for example, when the terminal 01 is a mobile phone, the direct-current voltage may be 9 V or 5 V). The direct-current voltage may be transmitted to the charging and discharging management circuit 14 through the data line 03 and the connector 15, and serves as an input voltage of the charging and discharging management circuit 14.

In this case, the charging and discharging circuit 14 may step down the input voltage (for example, 9 V or 5 V), and supply a stepped-down voltage (for example, 4.4 V) to the battery 13, to charge the battery 13. In addition, to drive the load circuit 20 to work, the battery 13 may supply a voltage (for example, 3.7 V or 3.8 V) to the load circuit 20. When a battery voltage U_{O} of the battery is greater than a threshold voltage Vth, the battery 13 may supply a voltage to the load circuit 20 by using the charging and discharging circuit 14. The threshold voltage Vth may be greater than a minimum working voltage Vmin of the load circuit 20. In addition, when the battery voltage Uo decreases to the threshold voltage Vth, to avoid a case that the load circuit 20 cannot work normally because a voltage supplied by the battery 13 to the load circuit 20 is less than the minimum working voltage Vmin of the load circuit 20, the charging and discharging circuit 14 may step up the battery voltage Uo, and output the stepped-up voltage to the load circuit 20. The following describes in detail a structure and a working process of the charging and discharging management circuit 14 with reference to different examples.

### Example 1

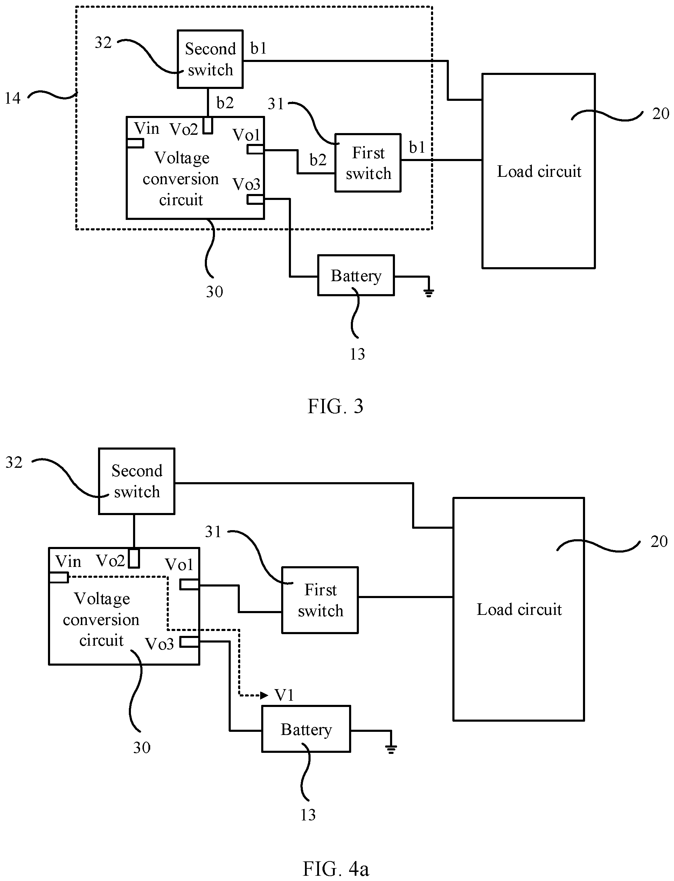

In this example, the charging and discharging management circuit 14 may include a first switch 31, a second switch 32, and a voltage conversion circuit 30 shown in FIG. 3. In this example, the voltage conversion circuit 30 may be an independently packaged chip. In this case, the voltage conversion circuit 30 may include an input end Vin, a first output end Vo1, a second output end Vo2, and a third output end Vo3.

A first end b1 of the first switch 31 may be coupled to the load circuit 20, and a second end b2 of the first switch 31 may be coupled to the first output end Vo1 of the voltage conversion circuit 30. A first end b1 of the second switch 32 may be coupled to the load circuit 20, and a second end b2 of the second switch 32 may be coupled to the second output end Vo2 of the voltage conversion circuit 30. In addition, the third output end Vo3 of the voltage conversion circuit 30 is further coupled to the battery 13.

In a first working state of the charging and discharging management circuit 14, as shown in FIG. 4a, the voltage conversion circuit 30 may be configured to step down an input voltage (for example, 5 V or 9 V) received by the input end Vin to a first voltage V1 (for example, 4.4 V), and output the first voltage V1 to the battery 13 through the third output end Vo3 of the voltage conversion circuit 30 along a dashed arrow in FIG. 4a, to charge the battery 13. Therefore, the first voltage V1 may be used to charge the battery 13.

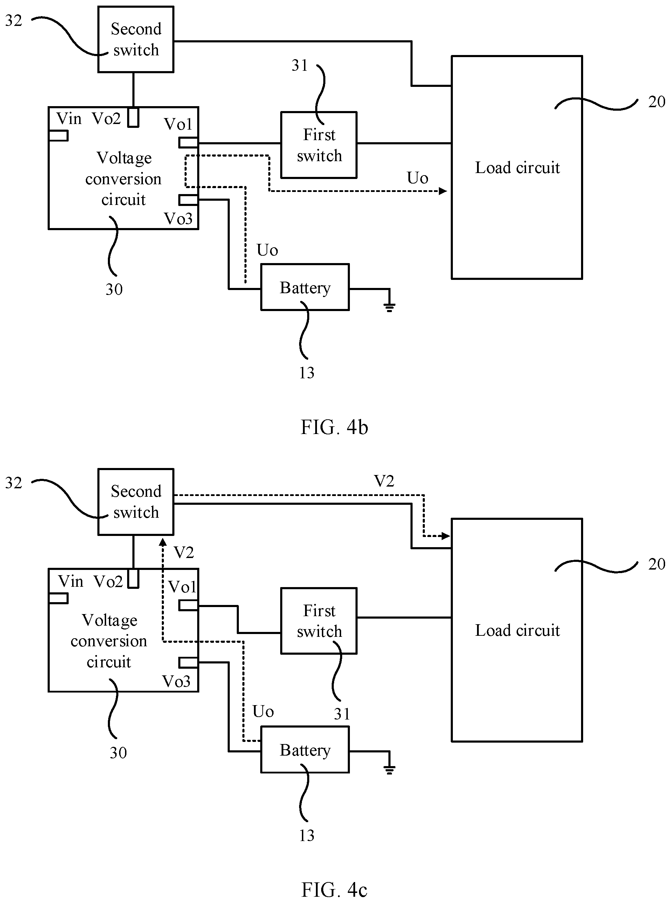

In a second working state of the charging and discharging management circuit 14, when the battery voltage U_{O} of the battery 13 is greater than the threshold voltage Vth (Uo > Vth) of the battery 13, the first switch 31 may be switched on, and the second switch 32 may be switched off. In this case, the battery 13 may supply a voltage to the load circuit 20 through the first switch 31 and the first output end Vo1 of the voltage conversion circuit 30 along a dashed arrow in FIG. 4b.

In the second working state, to ensure that the battery voltage Uo of the battery 13 can drive the load circuit 20 to work normally, Vmin < Vth < Uo ≤ Vmax. The minimum working voltage Vmin of the load circuit 20 is a minimum voltage, for example, 3.3 V, under which the load circuit 20 can work normally. When the load circuit 20 includes a plurality of circuit modules such as the main control module 200, the detection module 201, the display module 202, the audio module 203, the radio frequency module 204, and the baseband module 205, to ensure that the foregoing modules can work normally, a minimum value in a data set including minimum working voltages of the foregoing circuit modules may serve as the minimum working voltage Vmin of the load circuit 20. In addition, the maximum working voltage Vmax of the load circuit 20 is a maximum voltage, for example, 4.6 V, under which the load circuit 20 can work normally. When the load circuit 20 includes the plurality of the foregoing circuit modules, to ensure that the foregoing modules can work normally, a minimum value in a data set including maximum working voltages of the foregoing circuit modules may serve as the maximum working voltage Vmax of the load circuit 20. For example, when the threshold voltage Vth is 3.5 V, a range of the battery voltage Uo may be 3.6 V ≤ Uo ≤ 4.6 V.

In a third working state of the charging and discharging management circuit 14, when the terminal 01 works in a low-temperature environment (for example, below 10°C, below 5°C, or below 0°C) or the battery of the terminal 01 is aged (for example, a quantity of charging and discharging cycles of the battery is greater than 300 times or 500 times), the battery voltage U_{O} decreases after a voltage drop V_{R} based on an equivalent impedance of the battery 13 increases. When the battery voltage U_{O} decreases to the threshold voltage Vth (U_{O} = Vth) of the battery 13, the voltage conversion circuit 30 may step up the battery voltage U_{O} of the battery 13 to a second voltage V2. Then, the second switch 32 is switched on. The voltage conversion circuit 30 may output a stepped-up voltage, for example, the second voltage V2, to the load circuit 20 through the second switch 32 and the second output end Vo2 of the voltage conversion circuit 30 along dashed arrows in FIG. 4c. Finally, the first switch 31 is switched off.

In the third working state, to ensure that the second voltage V2 generated after the voltage conversion circuit 30 steps up the battery voltage U_{O} of the battery 13 can drive the load circuit 20 to work normally, Vmin < Vth < V2 ≤ Vmax. For example, when the threshold voltage Vth may be 3.5 V, a range of the second voltage V2 may be 3.6 V ≤ Uo ≤ 4.6 V. In this way, when the battery voltage U_{O} decreases to the threshold voltage Vth (U_{O} = Vth) of the battery 13, after the voltage conversion circuit 30 performs a step-up operation on the battery voltage Uo, the second voltage V2 output by the second output end Vo2 can drive the load circuit 20 to continue to work.

It can be learned from the foregoing that the threshold voltage Vth of the battery 13 may be greater than the minimum working voltage Vmin (Vth > Vmin) of the load circuit 20. In this case, an upper limit of the threshold voltage Vth may not be limited. In this embodiment of this application, a selection range of the threshold voltage Vth is provided, for example, Vth > Vmin. When the charging and discharging management circuit 14 works in the foregoing third working state, any voltage greater than the minimum working voltage Vmin of the load circuit 20 may be selected as the threshold voltage. In this way, when Vth > Vmin, when the battery voltage U_{O} decreases to the threshold voltage Vth, the voltage conversion circuit 30 performs the voltage step-up operation to step up the battery voltage U_{O} to the second voltage V2.

However, in a case in which Vth > Vmin and the battery voltage Uo decreases to the threshold voltage Vth, when a value of the threshold voltage Vth is relatively large, for example, when the threshold voltage Vth is greater than or equal to a rated voltage Vr (Vth ≥ Vr) of the battery 13, a power supply status of the battery 13 is good, and the battery 13 may directly supply power to the load circuit 20. In this case, if the voltage conversion circuit 30 performs the foregoing voltage step-up operation, power consumption is increased. Therefore, in some other embodiments of this application, the threshold voltage Vth of the battery 13 may alternatively be less than the rated voltage Vr (for example, 3.7 V or 3.8 V) of the battery 13. For example, Vmin < Vth < Vr, Vmin may be 3.3 V, Vr may be 3.8 V, and 3.3 V < Vth < 3.8 V. In this case, when the charging and discharging management circuit 14 works in the foregoing third working state, the threshold voltage Vth may be any voltage value in a range of 3.3 V to 3.8 V.

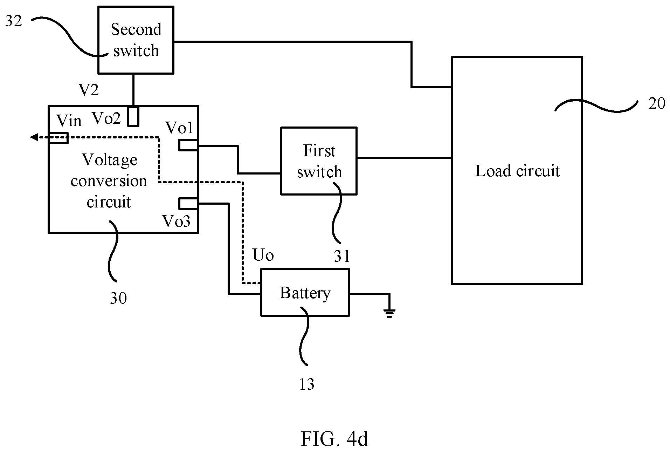

In this way, the voltage conversion circuit 30 performs the foregoing step-up operation only when the threshold voltage Vth meets Vmin < Vth < Vr. When Vth ≥ Vr, the voltage conversion circuit 30 does not need to step up the voltage, and the battery 13 directly supplies power to the load circuit 20. Therefore, the range of the threshold voltage Vth is limited to a range between the minimum working voltage Vmin of the load circuit 20 and the rated voltage Vr of the battery 13. This can narrow the range of the threshold voltage Vth, and reduce a probability of starting a step-up operation by the voltage conversion circuit 30 and power consumption. In addition, in a fourth working state of the charging and discharging management circuit 14, when the input end Vin of the voltage conversion circuit 30 is coupled to an external electronic device such as a Bluetooth headset, both the first switch 31 and the second switch 32 may be switched off. In this case, the voltage conversion circuit 30 may step up the battery voltage U_{O} supplied by the battery 13 (for example, step up the battery voltage Uo to the second voltage V2). In addition, the voltage conversion circuit 30 may charge the external electronic device through the input end Vin of the voltage conversion circuit 30 along a dashed arrow in FIG. 4d. In this case, the input end Vin may be an on the go (on the go, OTG) interface.

It can be learned from the foregoing description that the voltage conversion circuit 30 may step down a voltage of the input end Vin to the first voltage V1 that is used to charge the battery 13. The voltage conversion circuit 30 may further step up, to the second voltage V2, the battery voltage Uo supplied by the battery 13, to supply power to the load circuit 20 or charge the external electronic device. Therefore, the voltage conversion circuit 30 may have both a voltage step-up function and a voltage step-down function.

It should be noted that the voltage conversion circuit 30 may adjust a magnitude of an output voltage according to a power supply requirement of a load (for example, the load circuit 20 or the external electronic device) coupled to the voltage conversion circuit 30. Therefore, a voltage value of the second voltage V2 supplied by the voltage conversion circuit 30 to the load circuit 20 may be the same as or different from a voltage value of the second voltage V2 supplied by the voltage conversion circuit 30 to the external electronic device. The following describes voltage step-up and voltage step-down processes of the voltage conversion circuit 30 in detail while describing a structure and a control process of the voltage conversion circuit 30.

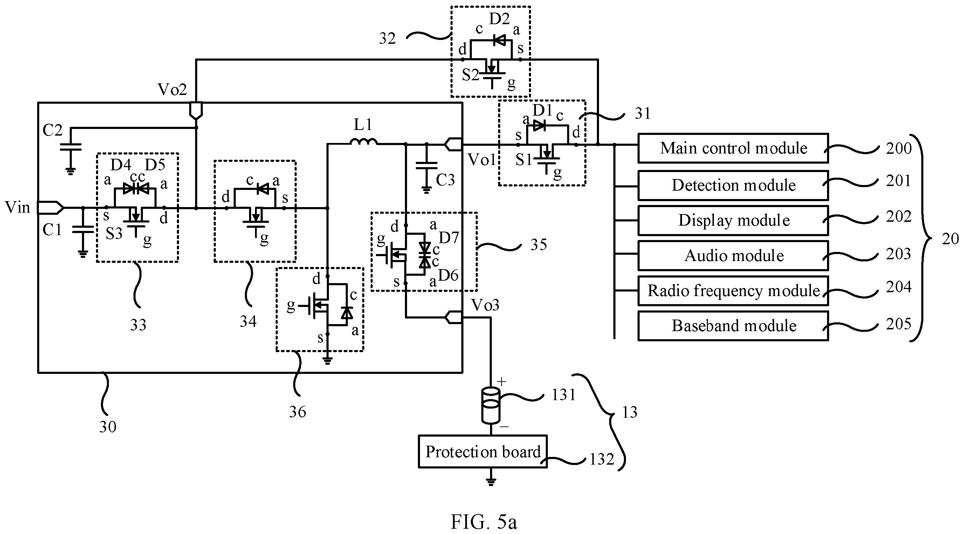

The following describes structures of the first switch 31 and the second switch 32. As shown in FIG. 5a, the first switch 31 includes a first transistor S1 and a first diode D1. It should be noted that a transistor in this embodiment of this application may be an N-channel metal-oxide-semiconductor (metal-oxide-semiconductor, NMOS) transistor, or may be a PMOS transistor. This is not limited in this application. For ease of description, the following uses an example in which a transistor is an NMOS transistor for description.

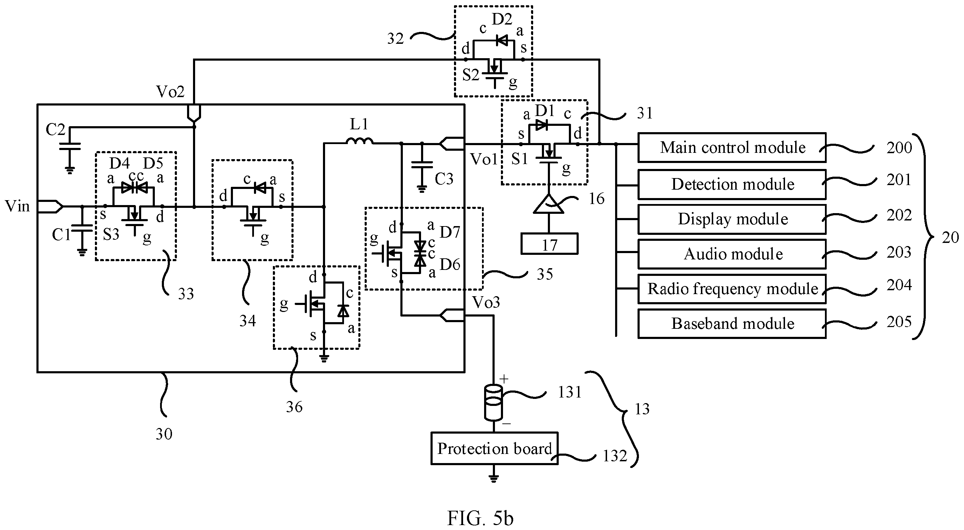

In some embodiments of this application, the first transistor S1 has a gate (gate, g), a first electrode such as a drain (drain, d), and a second electrode such as a source (source, s). The gate g of the first transistor S1 serves as a gating end of the first switch 31, and is configured to receive a gating signal. In some embodiments of this application, the terminal 01 may include a gating control circuit 17 and a drive circuit 16 shown in FIG. 5b. The gating control circuit 17 is configured to generate a logic signal. The drive circuit 16 may convert the logic signal into a voltage signal, and supply the voltage signal as a gating signal to the gate g of the first transistor S1. The first electrode (such as the drain d) of the first transistor S1, as the first end of the first switch 31, is coupled to the load circuit 20, and the second electrode (such as the source s) of the first transistor S1, as the second end of the first switch 31, is coupled to the first output end Vo1 of the voltage conversion circuit 30.

In addition, the first diode D1 may be a parasitic diode generated in a process of manufacturing the first transistor S1. In this case, the first diode D1 is a parasitic diode of the first transistor S1. Alternatively, the first diode D1 is a separately manufactured diode. When the first transistor S1 is an NMOS transistor, an anode (anode, a) of the first diode D1 is coupled to the second electrode (such as the source s) of the first transistor S1. A cathode (cathode, c) of the first diode D1 is coupled to the first electrode (such as the drain d) of the first transistor S1.

It should be noted that the following uses an example in which a transistor is an NMOS transistor for description. In this case, an anode a of a parasitic diode of the NMOS transistor is coupled to a source s of the NMOS transistor, and a cathode c of the parasitic diode is coupled to a drain d of the NMOS transistor.

In this case, when the gating signal received by the gate g of the first transistor S1 enables the first transistor S1 to be conducted, because a voltage drop over the two ends of the first transistor S1 is less than a voltage drop over the two ends of the first diode D1, a voltage of the first output end Vo1 of the voltage conversion circuit 30 may be transmitted to each module in the load circuit 20 by using the first transistor S1.

In addition, the first switch 31 including the first transistor S1 and the first diode D1 has a unidirectional switch-off function. When the gating signal received by the gate g of the first transistor S1 enables the first transistor S1 to be cut off, the voltage of the first output end Vo1 of the voltage conversion circuit 30 may still be transmitted to each module in the load circuit 20 by using the first diode D1. After a voltage of the cathode c of the first diode D1 is greater than a voltage of the anode d, the first diode D1 is cut off, and the first switch 31 is switched off. Therefore, in this embodiment of this application, that the first switch 31 is switched off may indicate that both the first transistor S1 and the first diode D1 in the first switch 31 are cut off. In this case, no electrical signal is transmitted between the voltage conversion circuits 30 and the load circuit 20 on the two sides of the first switch 31.

In this case, when the charging and discharging management circuit 14 works in the second working state, the battery voltage U_{O} supplied by the battery 13 to the load circuit 20 is greater than the threshold voltage Vth of the battery 13 (U_{O} > Vth), the second switch 32 is in an off state, the signal received by the gate g of the first transistor S1 in the first switch 31 controls the first transistor S1 to be conducted, and the battery 13 supplies a voltage to the load circuit 20 by using the first transistor S1 in the first switch 31.

In addition, when the charging and discharging management circuit 14 works in the third working state, the battery voltage U_{O} of the battery 13 decreases to the threshold voltage Vth of the battery 13 (U_{O} = Vth). The second switch 32 still maintains the off state. In addition, the first switch 31 may not be switched off immediately. First, the signal received by the gate g of the first transistor S1 in the first switch 31 controls the first transistor S1 to be cut off. In this case, the battery 13 supplies power to the load circuit 20 by using the first diode D1. Then, the voltage conversion circuit 30 steps up the battery voltage U_{O} to the second voltage V2. Next, the second switch 32 is switched on. The second voltage V2 is transmitted to the load circuit 20 through the second switch 32, so that after the voltage of the cathode c of the first diode D1 is greater than the voltage of the anode d, the first diode D1 is cut off. Because the first transistor S1 is already in a cut-off state, the entire first switch 31 is switched off. This can avoid a phenomenon that the terminal 01 is powered off because the first switch 31 is directly switched off and the second voltage V2 output by the voltage conversion circuit 30 through the second switch 32 has not been transmitted to the load circuit 20. The following describes a control process of the first switch 31 in detail while describing a control process of the charging and discharging management circuit 14.

It should be noted that the foregoing describes an example of the structure of the first switch 31. In some other embodiments of this application, the first switch 31 may further include a plurality of transistors connected in parallel to the first transistor S1, and the first switch 31 may further include a plurality of diodes. Each diode is coupled to one transistor. A manner of coupling a diode to a transistor is the same as a manner of coupling the first diode D1 to the first transistor S1. Details are not described herein again.

In addition, in some embodiments of this application, as shown in FIG. 5a, the second switch 32 includes a second transistor S2 and a second diode D2. As described above, the second diode D2 may be a parasitic diode of the second transistor S2. Alternatively, the second diode D2 may be a separately manufactured diode. A gate g of the second transistor S2 serves as a gating end of the second switch 32, and is configured to receive a gating signal. A process and a method in which the gate g of the second transistor S2 receives the gating signal are the same as those described above, and details are not described herein again. A first electrode (such as a source s) of the second transistor S2, as a first end of the second switch 32, is coupled to the load circuit 20, and a second electrode (such as a drain d) of the second transistor S2, as a second end of the second switch 32, is coupled to the second output end Vo2 of the voltage conversion circuit 30. An anode a of the second diode D2 is coupled to the first electrode (such as the source s) of the second transistor S2. A cathode c of the second diode D2 is coupled to the second electrode (such as the drain d) of the second transistor S2.

In this case, the second switch 32 including the second transistor S2 and the second diode D2 has a unidirectional switch-off function. For example, when the gating signal received by the gate g of the second transistor S2 controls the second transistor S2 to be cut off, the second switch 32 is switched off provided that a voltage of the cathode c of the second diode D2 is greater than a voltage of the anode d. Therefore, when the gating signal controls the second transistor S2 to be cut off, the voltage conversion circuit 30 is prevented from transmitting a voltage to the load circuit 20.

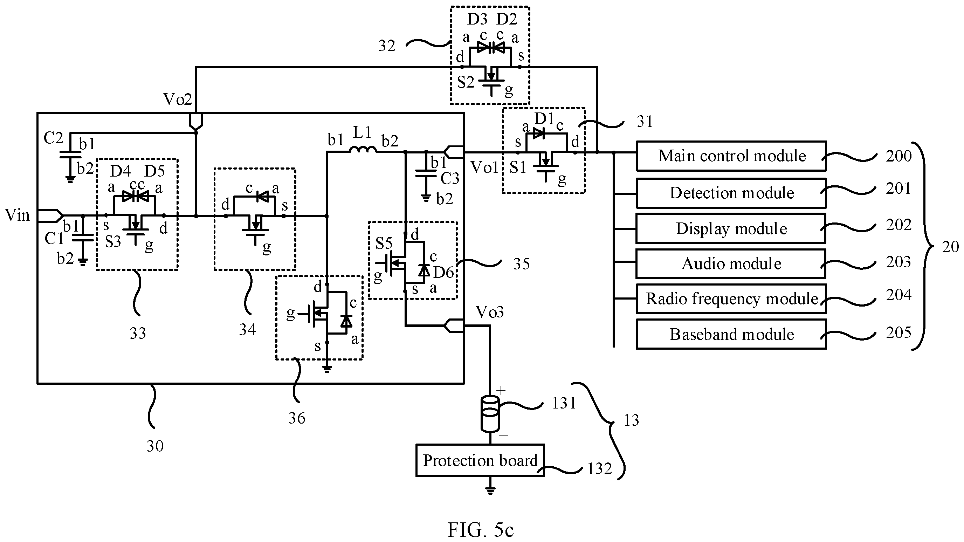

Alternatively, in some other embodiments of this application, as shown in FIG. 5c, in addition to the second transistor S2 and the second diode D2, the second switch 32 may further include a separately manufactured third diode D3. An anode a of the third diode D3 is coupled to the second electrode (such as the drain d) of the second transistor S2, and a cathode c of the third diode D3 is coupled to the cathode c of the second diode D2.

In this case, the second switch 32 including the second transistor S2, the second diode D2, and the third diode D3 has a bidirectional switch-off function. For example, when the gating signal received by the gate g of the second transistor S2 controls the second transistor S2 to be cut off, a signal of the second electrode (such as the drain d) of the second transistor S2 cannot be transmitted to the first electrode (such as the source s) of the second transistor S2. A signal of the first electrode (such as the source s) of the second transistor S2 cannot be transmitted to the second electrode (such as the drain d) of the second transistor S2.

It should be noted that the foregoing describes an example of the structure of the second switch 32. In some other embodiments of this application, the second switch 32 may include a plurality of transistors connected in parallel to the second transistor S2, and one diode coupled to each transistor (or two diodes disposed opposite to each other). A manner of coupling a transistor to a diode is the same as that described above, and details are not described herein again.

The following describes the structure of the voltage conversion circuit 30. As shown in FIG. 5c, the voltage conversion circuit 30 may include a third switch 33, a fourth switch 34, a fifth switch 35, a sixth switch 36, a first inductor L1, a first capacitor C1, a second capacitor C2, and a third capacitor C3.

As shown in FIG. 5c, the third switch 33 may include a third transistor S3, a fourth diode D4, and a fifth diode D5. A gate g of the third transistor S3 may serve as a gating end of the third switch 33, and is configured to receive a gating signal. A manner of receiving the gating signal may be the same as that described above, and details are not described herein again. A first electrode (such as a source s) of the third transistor S3 may serve as a first end of the third switch 33 to receive an input voltage. For example, the first electrode (such as the source s) of the third transistor S3 may be coupled to the signal input end Vin of the voltage conversion circuit 30. A second electrode (such as a drain d) of the third transistor S3, as a second end of the third switch 33, is coupled to a first end (a drain d of a transistor in the fourth switch 34) of the fourth switch 34 and a first end b1 of the second capacitor C2. The second electrode (such as the drain d) of the third transistor S3 may also be coupled to the second end (the drain d of the second transistor S2 in the second switch 32) of the second switch 32 through the second output end Vo2 of the voltage conversion circuit 30.

The fourth diode D4 may be a parasitic diode of the third transistor S3, or a separately manufactured diode. The fifth diode D5 is a separately manufactured diode, and an anode a of the fourth diode D4 is coupled to the first electrode (such as the source s) of the third transistor S3. A cathode c of the fourth diode D4 is coupled to a cathode c of the fifth diode D5. An anode a of the fifth diode D5 is coupled to the second electrode (such as the drain d) of the third transistor S3.

In this case, the third switch 33 including the third transistor S3, the fourth diode D4, and the fifth diode D5 has a bidirectional switch-off function. For example, when the gating signal received by the gate g of the third transistor S3 controls the third transistor S3 to be cut off, a signal of the source s of the third transistor S3 cannot be transmitted to the drain d of the third transistor S3, and a signal of the drain d of the third transistor S3 cannot be transmitted to the source s of the third transistor either. The following describes the bidirectional switch-off function of the third switch 33 in detail while describing the control process of the charging and discharging management circuit 14.

In addition, the fourth switch 34 and the sixth switch 36 in the voltage conversion circuit 30 each includes a transistor and a parasitic diode coupled to the transistor. A manner of coupling the transistor to the parasitic diode is not described herein again. The fourth switch 34 and the sixth switch 36 each may have a unidirectional switch-off function.

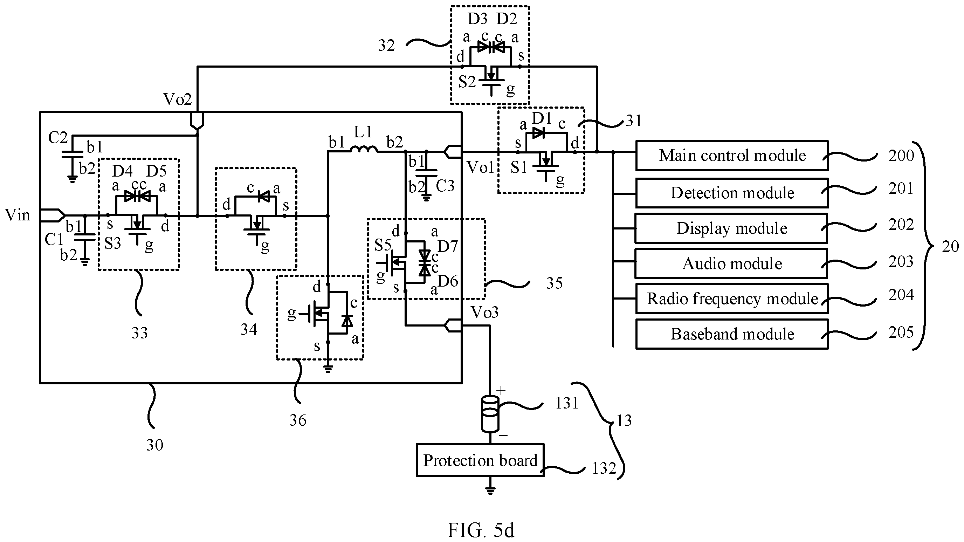

In some embodiments of this application, as shown in FIG. 5c, the fifth switch 35 may include a transistor S5 and a parasitic diode of the transistor S5, for example, a diode D6. A manner of coupling the diode D6 to the transistor S5 is the same as that described above, and details are not described herein again. In addition, in some other embodiments of this application, as shown in FIG. 5d, the fifth switch 35 further includes a separately manufactured diode D7. The diode D7 and the diode D6 are disposed reversely, so that the fifth switch 35 may have the foregoing bidirectional switch-off function.

In addition, as shown in FIG. 5d, a gating end (a gate g of the transistor in the fourth switch) of the fourth switch 34 is configured to receive a gating signal, and a second end (a source s of the transistor in the fourth switch) of the fourth switch 34 is coupled to a first end b1 of the first inductor L1. A second end b2 of the first inductor L1 is coupled to a first end (a drain d of the transistor S5) of the fifth switch 35, the second end (the source s of the first transistor S1) of the first switch 31, and a first end b1 of the third capacitor C3. A second end b2 of the third capacitor C3 is grounded.

In addition, a gating end (a gate g of the transistor S5) of the fifth switch 35 is configured to receive a gating signal, and a second end (a source s of the transistor S5) of the fifth switch 35 is coupled to the battery 13. A gating end (a gate g of a transistor in the sixth switch) of the sixth switch 36 is configured to receive a gating signal A first end (a drain d of the transistor in the sixth switch) of the sixth switch 36 is coupled to the second end (the source s of the transistor in the fourth switch 34) of the fourth switch 34, and a second end (a source s of the transistor in the sixth switch) of the sixth switch 36 is grounded.

It should be noted that descriptions are provided by using an example in which all transistors in the embodiments of this application are NMOS transistors. When the foregoing transistor is a PMOS transistor, marked locations of the source s and the drain d of the transistor in the accompanying drawings may be exchanged. In addition, an anode a of a parasitic diode of the PMOS transistor may be coupled to a drain d of the PMOS transistor, and a cathode c of the parasitic diode may be coupled to a source s of the PMOS transistor.

In addition, the battery 13 may include a cell 131. The cell 131 is configured to store and release electricity. The battery 13 may further include a protection board 132. The protection board 132 is configured to separate an external circuit from the cell 131, to avoid phenomena such as overvoltage, undervoltage, overcurrent, short circuit, and overtemperature in the cell 131.

Based on the circuit structure shown in FIG. 5a, the following describes a working mode of the terminal 01 in detail by using an example.

For example, in a first working mode of the terminal 01, the terminal 01 needs to be charged. In this working mode, a power supply method for the terminal 01 includes the following steps.

First, the terminal 01 is coupled to an external power supply network (such as 220 V). For example, the terminal 01 is coupled to the external power supply network by using a data line 03 and an adapter 02. The adapter 02 may convert a voltage of 220 V into a direct-current voltage (for example, 5 V or 9 V). The direct-current voltage may serve as an input voltage of the input end Vin of the voltage conversion circuit 30.

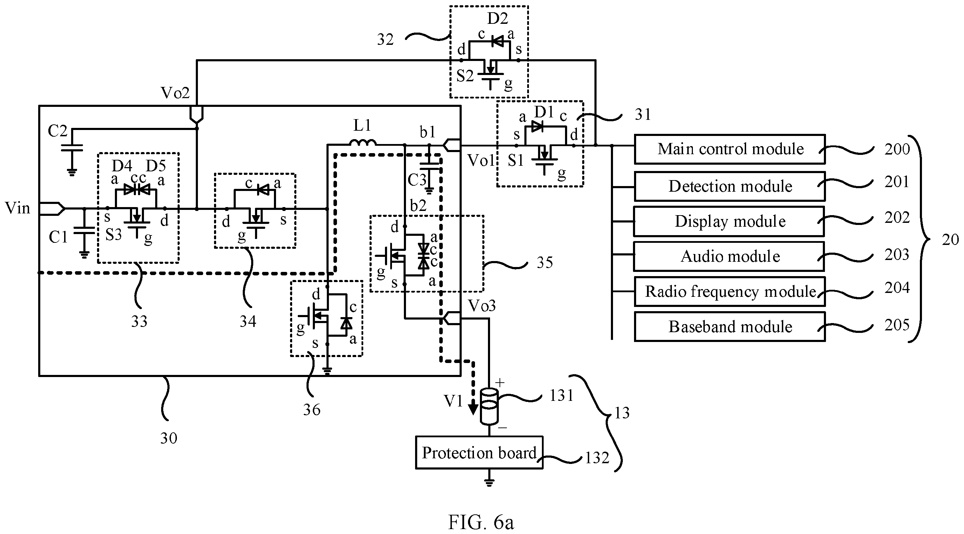

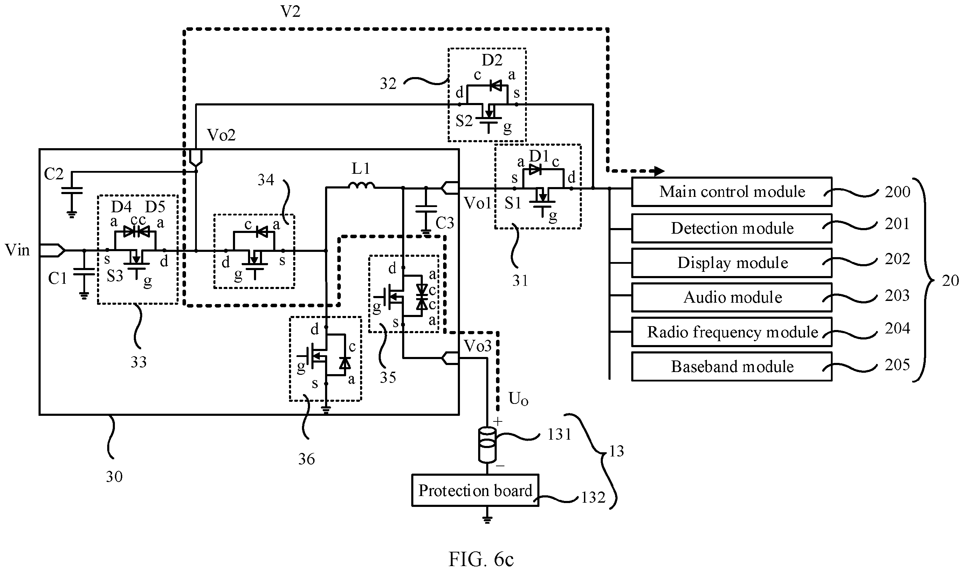

In addition, when the voltage conversion circuit 30 does not need to perform voltage step-down and both the fourth switch 34 and the sixth switch 36 in FIG. 6a are switched off, a voltage of the third capacitor C3 is zero. In this case, an output of the third output end Vo3 of the voltage conversion circuit 30 is equal to zero. Next, when the voltage conversion circuit 30 performs voltage step-down, the third switch 33 and the fifth switch 35 in the voltage conversion circuit 30 are switched on. Then, a pulse width modulation (PWM) signal is used to control the gate g of the transistor in the fourth switch 34 and the gate g of the transistor in the sixth switch 36, so that the fourth switch 34 and the sixth switch 36 can be switched on alternately.

For example, in a first phase in which the voltage conversion circuit 30 performs voltage step-down, the fourth switch 34 may be switched on, and the sixth switch 36 may be switched off. A current of the input end Vin of the voltage conversion circuit 30 charges the third capacitor C3 through the third switch 33, the fourth switch 34, and the first inductor L1, so that the voltage of the third capacitor C3 continuously increases. In this way, a charging voltage for the third capacitor C3 may be regulated by regulating a duty cycle of the PWM signal that is used to control the fourth switch 34 to be switched on and the sixth switch 36 to be switched off. Next, in a second phase in which the voltage conversion circuit 30 performs voltage step-down, the fourth switch 34 is switched off, and the sixth switch 36 is switched on. In this case, due to a current retention feature of the first inductor L1, a current flowing through the first inductor L1 does not immediately change to zero, but slowly changes to zero. Because the second end b2 of the third capacitor C3 and the second end (such as the source s) of the transistor in the sixth switch 36 are grounded, the current may flow from the first inductor L1 to the third capacitor C3, and then return to the first inductor L1 through the sixth switch 36, to form a discharging loop. In this process, the voltage of the third capacitor C3 continues to increase until the current of the first inductor L1 is zero.

Next, a gating control circuit configured to provide the PWM signal for the gate g of the transistor in the fourth switch 34 and the gate g of the transistor in the sixth switch 36 may determine whether a voltage supplied by the third capacitor C3 to the battery 13 reaches the first voltage V1. When the voltage supplied by the third capacitor C3 to the battery 13 reaches the first voltage V1, the third capacitor C3 supplies the first voltage V1 to the battery 13. In a process of supplying power to the battery 13, the voltage of the third capacitor C3 decreases. In this case, the gating control circuit may continue to supply the PWM signal to the gate g of the transistor in the fourth switch 34 and the gate g of the transistor in the sixth switch 36, to repeat the foregoing first phase, and continue to charge the third capacitor C3, so that the third capacitor C2 can stably supply the first voltage V1 to the battery 13. Therefore, by controlling duration in which the fourth switch 34 and the sixth switch 36 are switched on and switched off, a value of the voltage supplied by the third capacitor C3 to the battery 13 may be controlled, to implement a voltage step-down purpose.

In this case, the first capacitor C1, the fourth switch 34, the sixth switch 36, the first inductor L1, and the third capacitor C3 may form a buck circuit, which can step down a voltage of the input end Vin of the voltage conversion circuit 30 to the first voltage V1 (for example, 4.4 V). In addition, the first voltage V1 is transmitted to the battery 13 through the third output end Vo3 of the voltage conversion circuit 30 along a direction shown by a dashed arrow in FIG. 6a, to charge the battery 13.

In a process of charging the battery 13, the second switch 32 needs to be switched off. For example, a signal is input to the gate g of the second transistor S2 in the second switch 32, to control the second transistor S2 to be cut off. The first switch 31 may be switched on. For example, a gating signal is input to the gate g of the first transistor S1 in the first switch 31, to control the first transistor S1 to be conducted. In this way, in the process of charging the battery 13, after stepping down the voltage of the input end Vin to the first voltage V1, the voltage conversion circuit 30 may apply the first voltage V1 to the battery 13, and may further apply the first voltage V1 to the load circuit 20 by using the first transistor S1 in the first switch 31. Therefore, in a charging process of the terminal 01, some functions, such as functions of photographing, sending information, and watching a video, of the terminal 01 may be used.

For another example, in a second working mode of the terminal 01, the battery 13 in the terminal 01 supplies power to the load circuit 20. In this working mode, a power supply method for the terminal 01 includes the following steps.

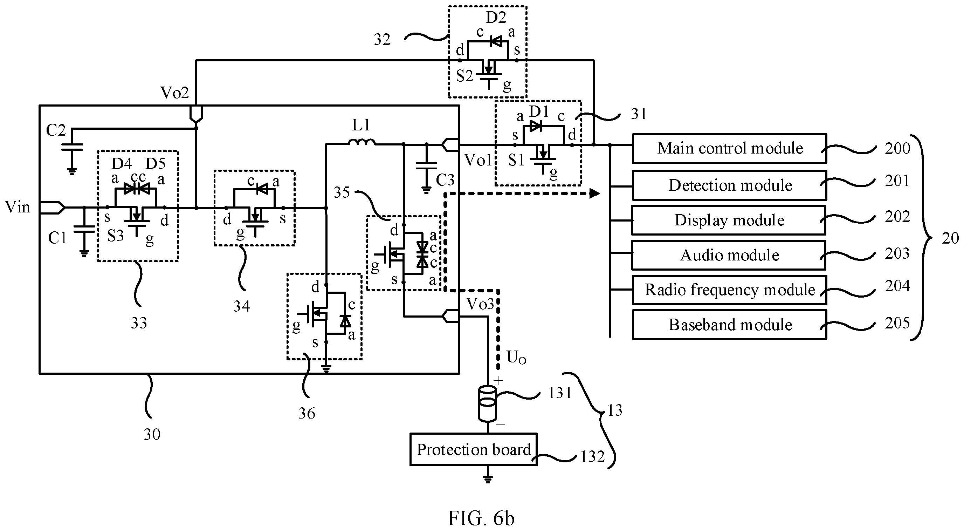

First, the third switch 33 shown in FIG. 6b is switched off. It can be known from the foregoing that the third switch 33 has a bidirectional switch-off function. Therefore, when the third transistor S3 in the third switch 33 is controlled to be cut off, the source s and the drain d of the third transistor S3 cannot perform transmission through the fourth diode D4 and the fifth diode D5. In this way, when the terminal 01 is coupled to an external charger, a phenomenon that the battery 13 of the terminal 01 flows back to the external charger when an internal voltage of the charging and discharging management circuit 14 is relatively high and a voltage of the external charger is relatively low does not occur.

In addition, the fourth switch 34 and the sixth switch 36 in the voltage conversion circuit 30 further need to be switched off, and the fifth switch 35 needs to be switched on. For example, a gating signal is input to the gate g of the transistor in the fourth switch 34, to control the transistor to be cut off, so that the fourth switch 34 is switched off. A gating signal is input to the gate g of the transistor in the sixth switch 36, to control the transistor to be cut off, so that the sixth switch 36 is switched off. In addition, a gating signal is input to the gate g of the transistor in the fifth switch 35, to control the transistor to be conducted, so that the fifth switch 35 is switched on.

It can be learned from the foregoing that, the threshold voltage Vth is greater than the minimum working voltage Vmin (Vth > Vmin) of the load circuit 20. Therefore, when the battery voltage Uo is greater than the threshold voltage Vth, it can be ensured that the battery voltage Uo output by the battery 13 to the load circuit 20 can drive the load circuit 20 to normally work. Therefore, the main control module 200 may detect whether the battery voltage Uo output by the battery 13 to the load circuit 20 is greater than the threshold voltage Vth of the battery 13. When the threshold voltage Vth is greater than the threshold voltage Vth of the battery 13, the first switch 31 shown in FIG. 6b may be switched on, and the second switch 32 shown in FIG. 6b may be switched off. For example, a gating signal is input to the gate g of the first transistor S1 in the first switch 31, to control the first transistor S1 to be conducted, so that the first switch 31 is switched on. A gating signal is input to the gate g of the second transistor S2 in the second switch 32, to control the second transistor S2 to be cut off, so that the second switch 32 is switched off. In this way, the battery 13 may supply a voltage to the load circuit 20 through the first switch 31 and the fifth switch 35 in the voltage conversion circuit 30 along a dashed arrow in FIG. 6b.

It should be noted that the first working mode and the second working mode of the terminal 01 provided in this embodiment of this application may be simultaneously performed. For example, when the battery 13 in the terminal 01 is charged by using the external charger, if the terminal 01 runs a relatively large program, for example, photographing, a charging current of the external charger may be simultaneously output to the load circuit 20 by using the voltage converter 30 with a charging current supplied by the battery 13. In addition, when the charger charges only the terminal 01 and the program in the terminal 01 is not used, the terminal 01 performs only the foregoing first working mode. Alternatively, when the terminal 01 runs an application program, and the terminal 01 may not be charged, the terminal 01 may perform only the second working mode.

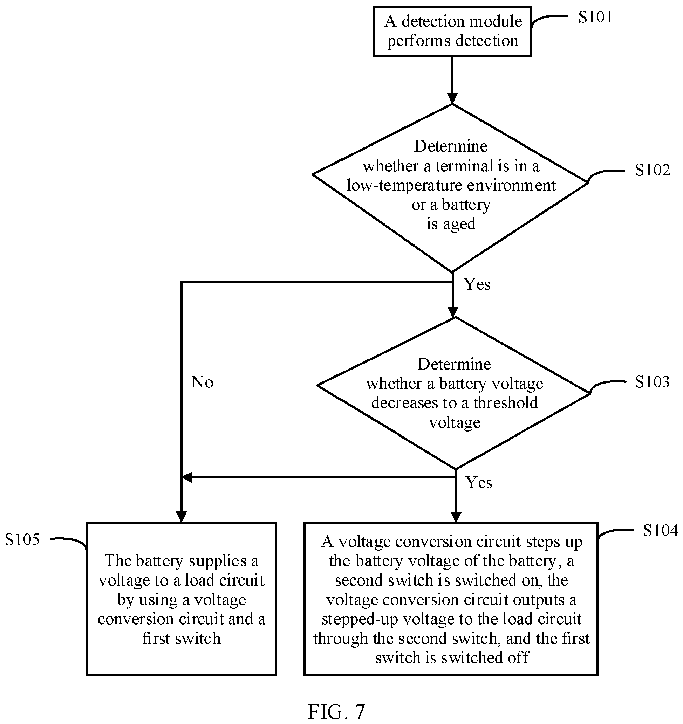

For another example, in a third operating mode of the terminal 01, when the terminal 01 works in a low-temperature environment (for example, below 10°C, below 5°C, or below 0°C) or the battery of the terminal 01 is aged (for example, a quantity of charging and discharging cycles of the battery is greater than 300 times or 500 times), the battery voltage Uo of the battery 13 decreases to the threshold voltage Vth, so that the battery voltage Uo may fail to drive the load circuit 20 to normally work. It can be learned from the foregoing description that the voltage conversion circuit 30 has a voltage step-up function. Therefore, the voltage conversion circuit 30 may step up the battery voltage Uo, and supply a stepped-up voltage, for example, the second voltage V2, to the load circuit 20. In this working mode, a power supply method for the terminal 01 may include S101 to S105 shown in FIG. 7.

S101: Perform detection by a detection module 201.

When the load circuit 20 includes a main control module 200 shown in FIG. 6c and a detection module 201 coupled to the main control module 200, in some embodiments of this application, the detection module 201 may be the foregoing temperature sensor. The temperature sensor detects an ambient temperature of the terminal 01, and transmits a detection result to the main control module 200. Alternatively, the detection module 201 may be the foregoing power metering chip, which detects a quantity of charging and discharging cycles of the battery 13 and transmits a detection result to the main control module 200.

S102: Determine whether the terminal 01 is in a low-temperature environment or whether the battery 13 is aged.

Next, the main control module 200 may compare the ambient temperature of the terminal 01 that is detected by the detection module 201 with a preset temperature (for example, below 10°C, below 5°C, or below 0°C). When the ambient temperature is lower than the preset temperature, it indicates that the terminal 01 is used in a low-temperature environment.

Alternatively, the main control module 200 may compare the quantity of charging and discharging cycles of the battery 13 that is detected by the detection module 201 with a preset quantity of times (300 times or 500 times). When the quantity of charging and discharging cycles of the battery 13 is greater than the preset quantity of times, it indicates that the battery 13 is in an aging state.

When the terminal 01 is in a low-temperature environment or the battery 13 is aged, the main control module 200 may detect a discharge current I_{O} of the battery 13. When the discharge current I_{O} is greater than or equal to a threshold current Ith (I_{O} ≥ Ith), the following S103 may be performed. When the main control module 200 can detect that the discharge current of the battery 13 is less than the threshold current Ith (I_{O} < Ith), the following S105 may be performed. For example, the battery 13 supplies power to the load circuit 20 through the first switch 31.

The threshold current may be Ith = 0.01 C. C indicates a capacity of a battery. When the terminal 01 is a mobile phone, a capacity C of the battery 13 may be 3000 mAh to 5000 mAh. In this case, the threshold current Ith may be in a range of (30 mA to 50 mA). A specific value of the threshold current Ith is not limited in this embodiment of this application, provided that it can be ensured that a determining condition for performing S103 is that the discharge current I_{O} is greater than or equal to the threshold current Ith (I_{O} ≥ Ith).

In this case, when the terminal 01 runs a relatively small program (for example, runs a WeChat program), the battery 13 needs to provide a relatively small current to the load circuit 20, and a discharge current I_{O} of the battery 13 is relatively small (for example, I_{O} < Ith). In this case, a voltage drop VR based on an equivalent impedance of the battery 13 is also small, and has little impact on the battery voltage Uo. Therefore, a voltage step-up function of the voltage conversion circuit 30 may not need to be used. On the contrary, when the terminal 01 runs a relatively large program (for example, watching a movie or running a large game), the discharge current I_{O} of the battery 13 is relatively large (for example, I_{O} ≥ Ith). The voltage drop VR based on the equivalent impedance of the battery 13 is very large. Therefore, the battery voltage Uo greatly decreases, and there is case in which the battery voltage Uo decreases to the threshold voltage Vth. In this case, the voltage conversion circuit 30 needs to start the voltage step-up function and then supply power to the load circuit 20.

In this way, before it is determined whether the battery voltage decreases to the threshold voltage Vth, a current required by a program that is running on the terminal 01 may be determined by determining whether the discharge current I_{O} is greater than the threshold current Ith. The voltage step-up function of the voltage conversion circuit 30 may need to be started only when a running program requires a relatively large current, so that power consumption can be reduced.

In addition, when the terminal 01 is not in a low-temperature environment, or the battery 13 is not aged, S105 shown in FIG. 7 is performed. For example, the battery 13 supplies power to the load circuit 20 through the first switch 31.

S103: Determine whether the battery voltage Uo decreases to the threshold voltage Vth.

When the terminal 01 is in a low-temperature environment, or when the battery 13 is aged, an equivalent impedance R of the battery 13 increases, causing a decrease of the battery voltage U_{O}. In this case, the main control module 200 determines whether the battery voltage U_{O} of the battery 13 decreases to the threshold voltage Vth. It can be known from the foregoing that the threshold voltage Vth of the battery 13 may be greater than the minimum working voltage Vmin (for example, 3.3 V) of the load circuit 20, and less than the rated voltage Vr (for example, 3.8 V) of the battery 13. For example, the threshold voltage Vth may be 3.4 V, 3.6 V, or 3.7 V.

When the battery voltage U_{O} decreases to the threshold voltage Vth, S104 is performed. Alternatively, when the battery voltage U_{O} does not decrease to the threshold voltage Vth, S105 is performed.

S104: The voltage conversion circuit 30 steps up the battery voltage U_{O} of the battery 13 (for example, steps up the voltage to a second voltage V2). The second switch 32 is switched on, and the voltage conversion circuit 30 outputs a stepped-up voltage, that is, the second voltage V2, to the load circuit 20 by using the second switch 32. The first switch 31 is switched off.

Before the voltage conversion circuit 30 steps up the voltage, the sixth switch 36 (as shown in FIG. 6c) is switched off, and the fourth switch 34 may be switched on or off. A voltage of the second output end Vo2 of the voltage conversion circuit 30 is equal to the battery voltage U_{O} of the battery 13.

In addition, a voltage step-up process of the voltage conversion circuit 30 is as follows: First, the third switch 33 is switched off, and the fifth switch 35 is switched on. Then, a PWM signal is used to control the gate g of the transistor in the fourth switch 34 and the gate g of the transistor in the sixth switch 36, so that the fourth switch 34 and the sixth switch 36 can be switched on alternately. In a first phase in which the voltage conversion circuit 30 performs voltage step-up, the sixth switch 36 is first switched on, and the fourth switch 34 is switched off. The first inductor L1 and the third capacitor C3 are charged by the battery voltage U_{O} of the battery 13 through the fifth switch 35. A charging electricity of the third capacitor C3 may be controlled by using switch-on duration of the sixth switch 36 and switch-off duration of the fourth switch 34. In this case, the voltage of the second output end Vo2 of the voltage conversion circuit 30 may still be equal to the battery voltage U_{O} of the battery 13.

Next, in a second phase in which the voltage conversion circuit 30 performs voltage step-up, the fourth switch 34 is switched on, and the sixth switch 36 is switched off. In this case, due to a current retention feature of the first inductor L1, a current flowing through the first inductor L1 in a discharging process of the third capacitor C3 does not immediately change to zero, but slowly changes to zero from the value when the charging is complete. However, because the sixth switch 36 is switched off, the first inductor L1 can discharge only through the fourth switch 34, and charge the second capacitor C2 in the discharging process. A voltage between the two ends of the second capacitor C2 (namely, a voltage of the second output end Vo2) increases. In this case, the voltage is higher than the battery voltage U_{O} of the battery 13, so that a voltage step-up process can be implemented.

In this case, the first inductor L1, the fourth switch 34, the sixth switch 36, the second capacitor C2, and the third capacitor C3 may form a boost circuit. In this way, the voltage conversion circuit 30 completes a process of stepping up the battery voltage U_{O}. In a process in which the voltage conversion circuit 30 steps up the battery voltage U_{O}, a gating signal is input to the gate g of the second transistor S2 in the second switch 32, to control the second transistor S2 to be cut off, so that the second switch 32 is switched off. In addition, a gating signal is input to the gate g of the first transistor S1 in the first switch 31, to control the first transistor S1 to be cut off. In this case, the battery voltage U_{O} of the battery 13 can still be transmitted to the load circuit 20 by using the first diode D1 in the first switch 31, to avoid that the terminal 01 is powered off because the load circuit 20 is powered off.

After the voltage conversion circuit 30 steps up the battery voltage Uo to the second voltage V2, the second switch 32 may be switched on. For example, a gating signal is input to the gate g of the second transistor S2 in the second switch 32, to control the second transistor S2 to be conducted, so that the second switch 32 is in a switch-on state. In this case, the voltage conversion circuit 30 transmits, to the load circuit 20 through the second switch 32 along a direction shown by a dashed line arrow in FIG. 6c, the second voltage V2 obtained after the battery voltage U_{O} is stepped up, to supply power to the load circuit 20.

In addition, it can be learned from the foregoing that the first end (the drain d of the first transistor S1) of the first switch 31 is also coupled to the load circuit 20, and the first switch 31 has a unidirectional switch-off function. When the voltage conversion circuit 30 performs the foregoing voltage step-up process, a gating signal provided for the gate g of the first transistor S1 controls the first transistor S1 to be cut off. After the voltage conversion circuit 30 steps up the battery voltage U_{O} to the second voltage V2, the second switch 32 is switched on, and the second voltage V2 is transmitted to the load circuit 20 through the second switch 32. In this case, a voltage of the drain d of the first transistor S1 in the first switch 31 is greater than a voltage of the source s of the first transistor S1, so that the first diode D1 in the first switch 31 is in a cut-off state. Therefore, the entire first switch 31 is in a switch-off state. The battery voltage U_{O} of the battery 13 cannot be transmitted to the load circuit 20 through the first switch 31.

It can be learned from the foregoing that, after the battery voltage U_{O} of the battery 13 is stepped up by the voltage conversion circuit 30 and supplied to the load circuit 20, the third switch 33 is in a switch-off state. It can be learned from the foregoing that the third switch 33 has a bidirectional switch-off function. Therefore, even if the terminal 01 is coupled to an external charging device in this case, an externally supplied power is not transmitted to the interior of the charging and discharging management circuit 14 through the third switch 33. This avoids a conflict between an internal power supply and an external power supply.

In conclusion, the terminal 01 provided in this embodiment of this application is provided with the voltage conversion circuit 30 coupled to the battery 13, and the first switch 31 and the second switch 32 that are coupled to the voltage conversion circuit 30. The battery 13, the first switch 31, and the second switch 32 are further coupled to the load circuit 20 in the terminal 01. The external charging device may supply the first voltage V1 to the battery 13 by using the voltage conversion circuit 30, to charge the battery 13. In addition, in a normal-temperature environment or when the battery 13 is not aged, the battery voltage U_{O} of the battery 13 is usually greater than the threshold voltage Vth of the battery. Because the threshold voltage Vth is greater than the minimum working voltage Vmin of the load circuit 20, the battery 13 may supply a voltage to the load circuit 20 through the fifth switch 35 and the first switch 31 in the voltage conversion circuit 30, to drive the load circuit 20 to work.

In addition, when the terminal 01 works in a low-temperature environment, or when the battery 13 is in an aging state, an equivalent impedance R of the battery 13 increases, causing a decrease of the battery voltage U_{O}. When the battery voltage U_{O} decreases to the threshold voltage Vth of the battery, if the battery voltage U_{O} continues to be supplied to the load circuit 20, there is a risk that the load circuit 20 cannot work normally, and the terminal 01 is automatically powered off. To resolve the foregoing problem, the voltage conversion circuit 30 in the terminal 01 in this embodiment of this application steps up the battery voltage Uo to the second voltage V2. In this case, the first transistor S1 in the first switch 31 is first controlled to be in a cut-off state, and then the second switch 32 is switched on. The second voltage V2 supplies power to the load circuit 20 through the second switch 32, to ensure that the load circuit 20 can work normally. Then, the first diode D1 in the first switch 31 is cut off, so that the entire first switch 31 is switched off.

In this way, in a low-temperature environment and when the battery 13 is aged, although the battery voltage UO decreases, under a boost action of the voltage conversion circuit 30, the stepped-up voltage can still supply power to the load circuit 20, thereby mitigating a problem that an endurance capability of the battery 13 of the terminal 01 is obviously insufficient in a low-temperature use environment or after the battery 13 is aged. In addition, when the voltage conversion circuit 30 is a chip having the voltage step-up and voltage step-down functions, in the charging and discharging management circuit 14, a chip mainly including the voltage conversion circuit 30 may be coupled to the first switch 31 and the second switch 32 to form the charging and discharging management circuit 14, so that a structure of the charging and discharging management circuit 14 can be simplified.

In addition, in a discharging process of the battery 13, the battery voltage U_{O} decreases to a minimum voltage at which the battery 13 stops discharging because it is inappropriate to continue discharging. The minimum voltage may be a discharge cut-off voltage Voff of the battery 13. The discharge cut-off voltage Voff is related to a material, a structure, and a manufacturing process of the battery 13. When the battery voltage U_{O} is less than the discharge cut-off voltage Voff of the battery 13, the battery 13 may be further provided with an undervoltage protection voltage V0, to disconnect the battery 13 from the load circuit 20 and the voltage conversion circuit 30 and avoid damage to the battery 13. V0 < Voff. When different types of the battery 13 may indicate different values that can be set for the undervoltage protection voltage V0. When the battery voltage Uo decreases to the discharge cut-off voltage Voff, the battery 13 may be disconnected from the load circuit 20, to stop supplying power to the load circuit 20. However, the battery 13 still releases a weak current to another electronic component coupled to the battery 13, for example, a power button. When the battery voltage U_{O} decreases to the undervoltage protection voltage V0, the protection board 132 in the battery 13 separates the cell 131 from the load circuit 20 and the voltage conversion circuit 30, to prevent the cell 131 from further discharging.

In a normal-temperature (for example, 20°C) state, or when the battery 13 is not aged (for example, a quantity of charging and discharging cycles is 200 times), the discharge cut-off voltage Voff_a of the battery 13 may be 3.0 V. It can be learned from the foregoing that when the battery voltage Uo is less than the discharge cut-off voltage Voff_a of the battery 13, to avoid damage to the battery 13, the undervoltage protection voltage V0_a needs to be less than the discharge cut-off voltage Voff_a. For example, the undervoltage protection voltage V0_a may be 2.5 V.

In this case, the threshold voltage Vth (for example, 3.7 V) of the battery 13, the minimum working voltage Vmin (for example, 3.3 V) of the load circuit 20, the discharge cut-off voltage Voff_a (for example, 3.0 V), and the undervoltage protection voltage V0_a (2.5 V) meet a formula: Vth > Vmin > Voff_a > V0_a.

However, the discharge cut-off voltage Voff decreases as a temperature decreases or an aging degree of the battery 13 increases. For example, in a low-temperature (such as 0°C) state, or when the battery 13 is aged (for example, a quantity of charging and discharging cycles is 500 times), the discharge cut-off voltage Voff_b of the battery 13 may decrease to 2.4 V. In this case, the discharge cut-off voltage Voff_b is lower than an undervoltage protection voltage V0_a (for example, 2.5 V) that is set when the temperature is normal or the battery is not aged. If the undervoltage protection voltage V0_a is not lowered in this case, when the battery voltage U_{O} of the battery 13 decreases to the undervoltage protection voltage V0_a (for example, 2.5 V), the protection board 132 disconnects the cell 131 from the voltage conversion circuit 30, and the terminal 01 is powered off.

To resolve the foregoing problem, before S104, for example, before the voltage conversion circuit 30 steps up the battery voltage U_{O}, the power supply method further includes: The main control module 200 may lower the undervoltage protection voltage of the battery 13, so that a lowered undervoltage protection voltage V0_b (for example, 2.0 V) is always less than a current discharge cut-off voltage Voff_b (for example, 2.4 V) of the battery 13. Specifically, when the battery 13 includes the cell 131 and the protection board 132, the main control module 200 may send a control signal to the protection board 132, so that the protection board 132 can lower the undervoltage protection voltage V0 of the battery 13.

In this case, the threshold voltage Vth (for example, 3.7 V) of the battery 13, the minimum working voltage Vmin (for example, 3.3 V), the discharge cut-off voltage Voff_b (for example, 2.4 V), and the undervoltage protection voltage V0_a (2.0 V) of the load circuit 20 meet the following formula: Vth > Vmin > Voff_b > V0_a.

In this way, in a low-temperature environment or when the battery is aged, when a voltage of the battery 13 decreases to the threshold voltage Vth, in a process of further discharging the battery 13, the battery voltage U_{O} of the battery 13 may decrease to the discharge cut-off voltage Voff_b (for example, 2.4 V). The discharge cut-off voltage Voff_b (for example, 2.4 V) is greater than the lowered undervoltage protection voltage V0_a (2.0 V). Therefore, the protection board 132 does not disconnect the cell 131 from the voltage conversion circuit 30, so that it is possible to discharge the battery 13 to a lower discharge cut-off voltage. The voltage conversion circuit 30 may step up the battery voltage U_{O} of the battery 13, and supply a stepped-up voltage to the load circuit 20 through the second switch 32, to drive the load circuit 20 to continue working.

It can be learned from the foregoing that the discharge cut-off voltage Voff of the battery 13 varies with factors such as a temperature and a battery aging degree, but the threshold voltage Vth of the battery 13 and the minimum working voltage Vmin of the load circuit 20 do not vary with factors such as the temperature and the battery aging degree. In addition, no matter how the discharge cut-off voltage Voff of the battery 13 changes, causing the undervoltage protection voltage V0 to be correspondingly adjusted, the foregoing voltages of the battery 13 in a current state all meet a formula: Vth > Vmin > Voff > V0.

In addition, the terminal 01 has a fourth working mode. In this working mode, after the battery voltage Uo of the battery 13 is stepped up by the voltage conversion circuit 30, the input end Vin of the voltage conversion circuit 30 may charge an external apparatus such as a Bluetooth headset, or an electronic device such as a mobile phone.

### Example 2

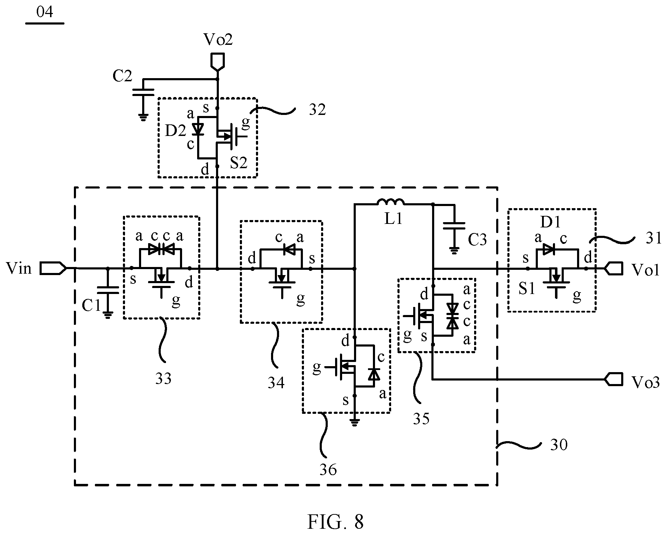

An embodiment of this application provides a charging and discharging management chip 04. As shown in FIG. 8, the charging and discharging management chip 04 includes a first switch 31, a second switch 32, and a voltage conversion circuit 30 shown in FIG. 8.

Same as that in Example 1, the first switch 31 may include a first transistor S1 and a first diode D1. The second switch 32 may include a second transistor S2 and a second diode D2. Alternatively, in some other embodiments of this application, the second switch 32 may further include a third diode D3 (as shown in FIG. 5c). In addition, the voltage conversion circuit 30 may include the third switch 33, the fourth switch 34, the fifth switch 35, the sixth switch 36, the first capacitor C1, the second capacitor C2, and the third capacitor C3 described above. Connection relationships between components in the voltage conversion circuit 30 are the same as those described above, and details are not described herein again.

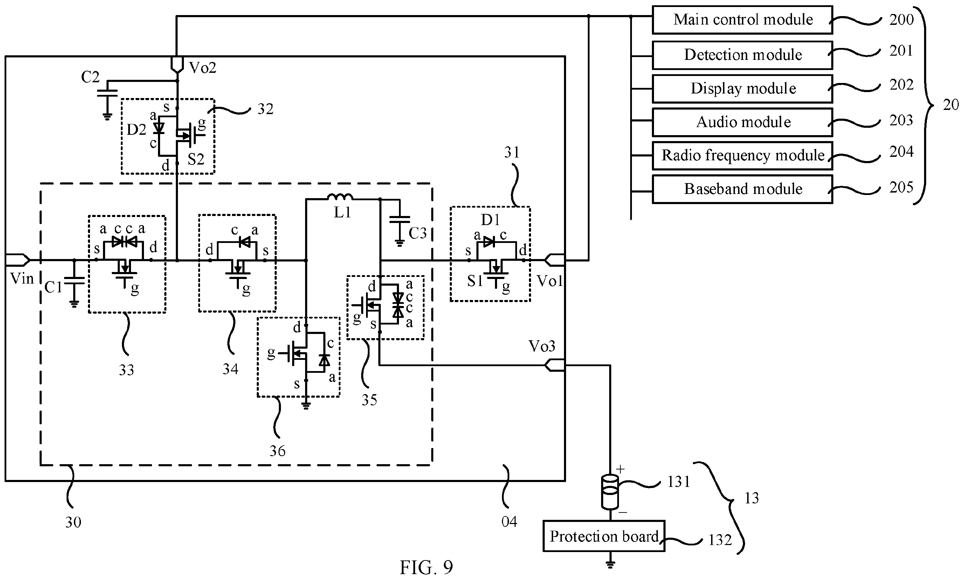

Difference from that in Example 1, the first switch 31, the second switch 32, and the voltage conversion circuit 30 are integrated into a same chip, for example, the charging and discharging management chip 04. As shown in FIG. 8, the charging and discharging management chip 04 has an input end Vin, a first output end Vo1, a second output end Vo2, and a third output end Vo3. As shown in FIG. 9, the first output end Vo1 and the second output end Vo2 are coupled to a load circuit 20. The third output end Vo3 is coupled to a battery 13.

Based on this, a first end (a drain d of the first transistor S1) of the first switch 31 is coupled to the first output end Vo1. In this case, when a battery voltage U_{O} is greater than a threshold voltage Vth of the battery 13, the voltage conversion circuit 30 outputs the battery voltage U_{O} to the first output end Vo1 through the first switch 31. The load circuit 20 receives the battery voltage U_{O} by using the first output end Vo1. In addition, a first end (a source s of the second transistor S2) of the second switch 32 is coupled to the second output end Vo2. In this case, when the battery voltage U_{O} decreases to the threshold voltage Vth, the voltage conversion circuit 30 steps up the battery voltage U_{O}, and outputs a stepped-up voltage to the second output end Vo2 through the second switch 32. The load circuit 20 receives, through the second output end Vo2, the voltage stepped up by the voltage conversion circuit 30.

In this example, the terminal 01 having the charging and discharging management circuit chip 04 is the same as the terminal 01 in Example 1, and both have the foregoing working modes. In addition, in each working mode, a working process of the charging and discharging management circuit chip 04 in the terminal 01 is similar to the working process of the charging and discharging management circuit 14, and details are not described herein again.

### Example 3

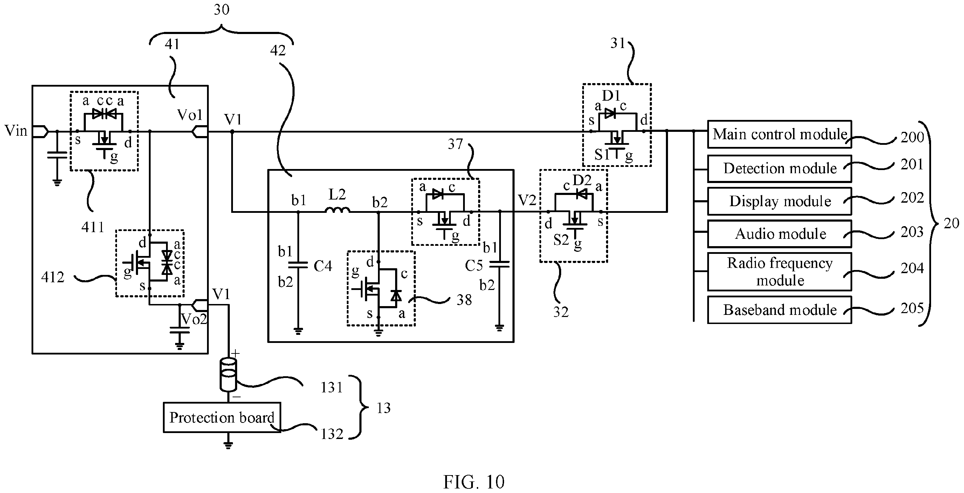

In this example, same as that in Example 1, the charging and discharging management circuit 14 may include a voltage conversion circuit 30, a first switch 31, and a second switch 32 that are shown in FIG. 10. Structures of the first switch 31 and the second switch 32 are the same as those described above, and details are not described herein again. Different from that in Example 1, the voltage conversion circuit 30 includes a low dropout regulator 41 and a boost circuit 42 that are shown in FIG. 10.

The low dropout regulator (low dropout regulator, LDO) 41 may have an input end Vin, and the input end Vin is configured to receive an input end voltage, for example, 5 V or 9 V. In addition, the low dropout regulator 41 further has a first output end Vo1 and a second output end Vo2. The first output end Vo1 of the low dropout regulator 41 is coupled to a second end (for example, a source s of a first transistor S1 in the first switch 31) of the first switch 31. The second output end Vo2 of the low dropout regulator 41 is coupled to a battery 13. The low dropout regulator 41 is configured to: step down an input voltage received by the input end Vin to a first voltage V1 (for example, 4.4 V), and supply the first voltage V1 to the battery 13, to charge the battery 13.

In addition, the first switch 31 is controlled to be switched on and the second switch 32 is controlled to be switched off. For example, a gating signal is input to a gate g of the first transistor S1 in the first switch 31, to control the first transistor S1 to be conducted, so that the first switch 31 is switched on. In addition, a gating signal is input to a gate g of a second transistor S2 in the second switch 32, to control the second transistor S2 to be cut off, so that the second switch 32 is switched off. The LDO 41 may supply the foregoing first voltage V1 (for example, 4.4 V) to the load circuit 20 by using the first transistor S1 in the first switch 31, to drive a load circuit 20 to work.

In this embodiment of this application, the LDO 41 may include a voltage stabilizing switch 411. The voltage stabilizing switch 411 may include one transistor and two diodes that are disposed opposite to each other. For example, one diode is a parasitic diode of the transistor when an anode c of the diode is coupled to a source s of the transistor and a cathode c of the diode is coupled to a drain d of the transistor. Furthermore, the other diode may be a diode disposed separately. In this way, the voltage stabilizing switch 411 having the foregoing two diodes has the foregoing bidirectional switch-off function. When the voltage stabilizing switch 411 is coupled between the input end Vin and the first output end Vo1, the voltage stabilizing switch 411 can adjust a magnitude of an on impedance of the voltage stabilizing switch 411, so that a voltage value of the first voltage V1 can be stabilized within a preset range without being affected by fluctuation of the input voltage or the load circuit 20.

In some embodiments of this application, the LDO 41 may further include a battery control switch 412. Alternatively, a battery control switch 412 may include one transistor and two diodes disposed opposite to each other, and one diode is a parasitic diode of the transistor. A manner of disposing the parasitic diode is the same as that described above, and details are not described herein again. Furthermore, the other diode may be a diode disposed separately. In this way, the battery control switch 412 having the foregoing two diodes has the foregoing bidirectional switch-off function. The battery control switch 412 is coupled between the voltage stabilizing switch 411 and the battery 13, and is configured to transmit the first voltage V1 output by the voltage stabilizing switch 411 to the battery 13 by using the second output end Vo2. Alternatively, to prevent phenomena such as overcharge and overdischarge of the battery 13, the voltage stabilizing switch 411 and the battery 13 are disconnected in time.

In addition, the boost circuit 42 is coupled to the LDO 41 and a second end of the second switch 32 (for example, a drain d of the second transistor S2 in the second switch 32). Similarly, it may be learned that a gating signal is input to the gate g of the second transistor S2 in the second switch 32, to control the second transistor S2 to be cut off, so that the second switch 32 is switched off. In addition, a gating signal is input to the gate g of the first transistor S1 in the first switch 31, to control the first transistor S1 to be cut off. In this case, the battery voltage U_{O} of the battery 13 can still be transmitted to the load circuit 20 by using the first diode D1 in the first switch 31, to avoid that the terminal 01 is powered off because the load circuit 20 is powered off.

Next, the boost circuit 42 steps up the battery voltage Uo (a stepped-up voltage is the second voltage V2). Then, a gating signal is input to the gate g of the second transistor S2 in the second switch 32, to control the second transistor S2 to be conducted, so that the second switch 32 is switched on. The boost circuit 42 may output the stepped-up voltage (for example, the second voltage V2) to the load circuit 20 through the second switch 32.

As described above, when the voltage conversion circuit 30 steps up the battery voltage U_{O} to the second voltage V2, and transmits the second voltage V2 to the load circuit 20 through the second switch 32, a voltage of the drain d of the first transistor S1 in the first switch 31 is greater than a voltage of the source s of the first transistor S1. In this case, the first diode D1 in the first switch 31 is in a cut-off state, and the entire first switch 31 is in a switch-off state. The battery voltage U_{O} of the battery 13 cannot be transmitted to the load circuit 20 through the first switch 31.

In some embodiments of this application, as shown in FIG. 10, the boost circuit 42 may include a second inductor L2, a seventh switch 37, an eighth switch 38, a fourth capacitor C4, and a fifth capacitor C5. The seventh switch 37 includes a transistor and a parasitic diode of the transistor. The eighth switch 38 includes a transistor and a parasitic diode of the transistor. A manner of disposing a parasitic diode is the same as that described above, and details are not described herein again.

A first end b1 of the second inductor L2 is coupled to the LDO 41 and a first end b1 of the fourth capacitor C4. A second end b2 of the second inductor L2 is coupled to a first end (a source s of the transistor in the seventh switch 37) of the seventh switch 37. A second end (a drain d of the transistor in the seventh switch 37) of the seventh switch 37 is coupled to the second end (the drain d of the second transistor S2 in the second switch 32) of the second switch 32 and a first end b1 of the fifth capacitor C5. A gating end of the seventh switch 37 is configured to receive a gating signal. A second end b2 of the fourth capacitor C4 is grounded, and a second end b2 of the fifth capacitor C5 is grounded. A gating end of the eighth switch 38 is configured to receive a gating signal. A process in which the gating ends of the seventh switch 37 and the eighth switch 38 receive the foregoing gating signals is the same as that described above, and details are not described herein again. A first end (a drain d of a transistor in the eighth switch 38) of the eighth switch 38 is coupled to a second end b2 of the second inductor L2, and a second end (a source s of the transistor in the eighth switch 38) of the eighth switch 38 is grounded.

Based on the circuit structure shown in FIG. 10, the following describes a working mode of the terminal 01 in detail by using an example.

In a first working mode of the terminal 01, the terminal 01 needs to be charged. In this working mode, a power supply method for the terminal 01 includes the following steps.

First, the terminal 01 is coupled to an external power supply network (such as 220 V) or an external charger by using a data line 03 and an adapter 02. As described above, the adapter 02 may convert a voltage of 220 V into a direct-current voltage (for example, 5 V or 9 V). The direct-current voltage may be used as an input voltage of the input end Vin of the LDO 41.

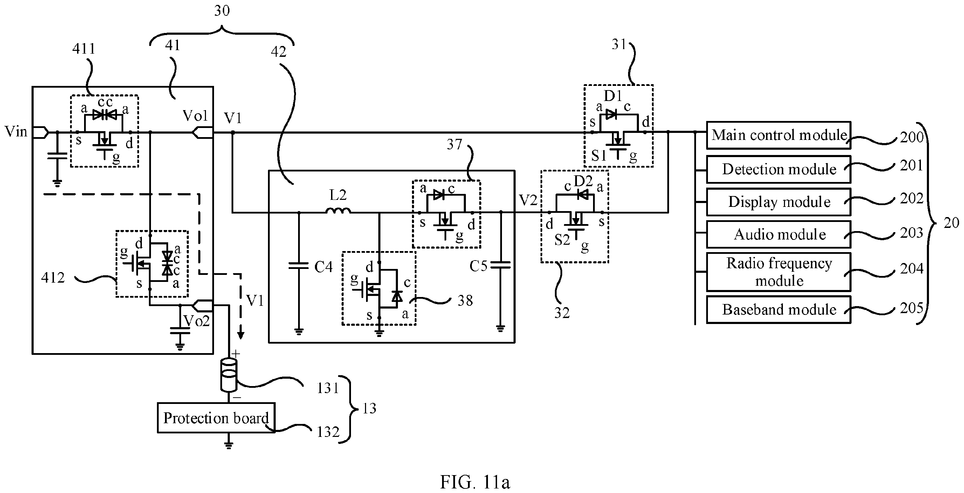

Next, the voltage stabilizing switch 411 and the battery control switch 412 in the LDO 41 are switched on. For example, a gating signal is input to a gate g of a transistor in the voltage stabilizing switch 411, to control the transistor to be conducted, so that the voltage stabilizing switch 411 is switched on. In addition, a gating signal is input to a gate g of a transistor in the battery control switch 412, to control the transistor to be conducted, so that the battery control switch 412 is switched on. The LDO 41 steps down, to a first voltage V1 (for example, 4.4 V), the input voltage received by the input end Vin. Then, the voltage is transmitted to the battery 13 along a direction shown by a dashed arrow in FIG. 11a through the second output end Vo2 of the LDO 41, to charge the battery 13.

In a process of charging the battery 13, the second switch 32 needs to be switched off. The first switch 31 may be switched on. For example, a gating signal is input to the gate g of the second transistor S2 in the second switch 32, to control the second transistor S2 to be cut off, to switch off the second switch 32. In addition, a gating signal is input to the gate g of the first transistor S1 in the first switch 31, to control the first transistor S1 to be conducted, so that the first switch 31 is switched on. In this way, in the process of charging the battery 13, after stepping down the voltage (for example, 5 V or 9 V) of the input end Vin to the first voltage V1 (for example, 4.4 V), the LDO 41 may apply the first voltage V1 to the battery 13, and may further apply the first voltage V1 to the load circuit 20 by using the first transistor S1 in the first switch 31. Therefore, in a charging process of the terminal 01, some functions, such as functions of photographing, sending information, and watching a video, of the terminal 01 may be used.

For another example, in a second working mode of the terminal 01, the battery 13 in the terminal 01 supplies power to the load circuit 20. In this working mode, a power supply method for the terminal 01 includes the following steps.

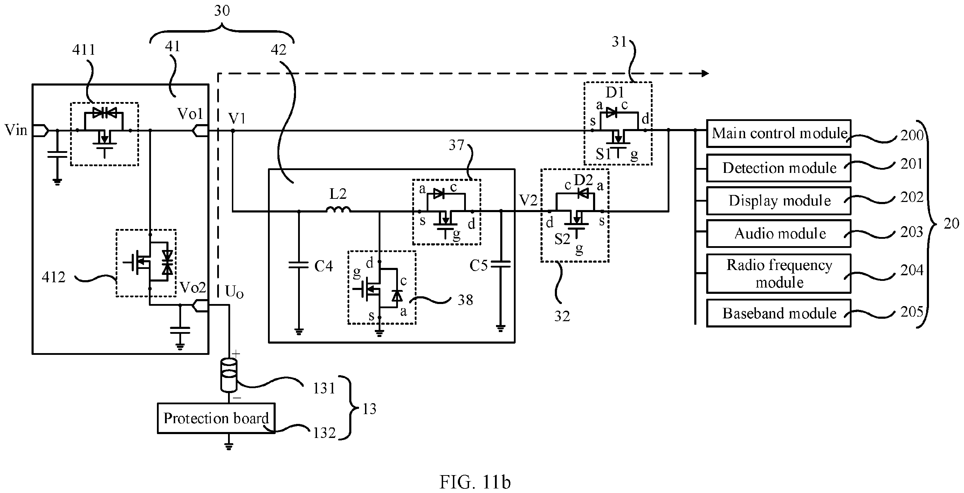

First, the battery control switch 412 is switched on. A switch-on manner is the same as that described above, and details are not described herein again. Then, the main control module 200 may detect whether the battery voltage Uo output by the battery 13 to the load circuit 20 is greater than the threshold voltage Vth of the battery 13. When the battery voltage Uo is greater than the threshold voltage Vth of the battery 13, the first switch 31 shown in FIG. 11b may be switched on, and the second switch 32 shown in FIG. 11b may be switched off. For example, a gating signal is input to the gate g of the second transistor S2 in the second switch 32, to control the second transistor S2 to be cut off, to switch off the second switch 32. In addition, a gating signal is input to the gate g of the first transistor S1 in the first switch 31, to control the first transistor S1 to be conducted, so that the first switch 31 is switched on. In this way, the battery 13 may output the battery voltage Uo to the load circuit 20 through the battery control switch 412 and the first transistor S1 in the first switch 31 in the LDO 41 along a dashed arrow in FIG. 11b. I can be learned from the foregoing that the threshold voltage Vth is greater than the minimum working voltage Vmin of the load circuit 20. Therefore, when the battery voltage Uo is greater than the threshold voltage Vth, it can be ensured that the voltage supplied by the battery 13 to the load circuit 20 can drive the load circuit 20 to normally work.

As described above, the first working mode and the second working mode of the terminal 01 in this example may be simultaneously performed. For example, when the battery 13 in the terminal 01 is charged by using the external charger, if the terminal 01 runs a relatively large program, for example, photographing, a charging current of the external charger may be simultaneously output to the load circuit 20 by using the voltage converter 30 with a charging current supplied by the battery 13. As described above, when only the terminal 01 is charged, the terminal 01 works in the first working mode. When only the program of the terminal 01 is used, the terminal 01 works in the second working mode.

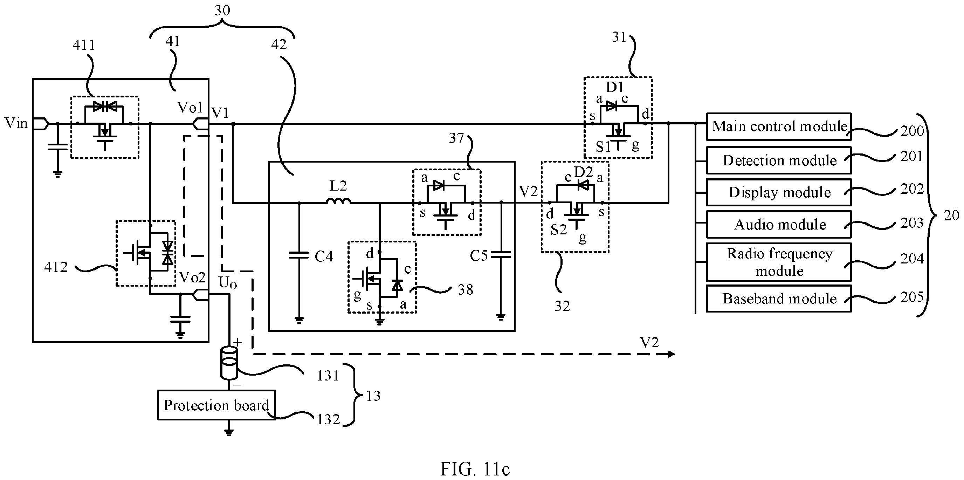

For another example, in a third working mode of the terminal 01, when the input end Vin of the LDO 41 is disconnected from the external charging device, and the terminal 01 works in a low-temperature environment or the battery of the terminal 01 is aged, after the battery voltage Uo is stepped up by the voltage conversion circuit 30, as shown in FIG. 11c, power is supplied to the load circuit 20. In this working mode, a power supply method for the terminal 01 includes S101 to S105 shown in FIG. 7. Execution processes of S101, S102, S103, and S105 are the same as those in Example 1, and details are not described herein again.

Different from that in Example 1, in this example, the voltage conversion circuit 30 includes the LDO 41 and the boost circuit 42 that are shown in FIG. 10. Before the boost circuit 42 steps up the voltage, the eighth switch 38 is switched off, the seventh switch 37 may be switched on or off. A voltage of the first output end Vo1 of the LDO 41 is equal to the voltage output by the boost circuit 42.

In addition, S104 in FIG. 7 specifically includes: in the boost circuit 42, APWM signal is used to control the seventh switch 37 and the eighth switch 38 to be switched on alternately. In a first phase in which the boost circuit 42 performs voltage step-up, the eighth switch 38 is first switched on, and the seventh switch 37 is switched off. The first output end Vo1 of the LDO 41 charges the second inductor L2 and the fourth capacitor C4. A charging electricity of the fourth capacitor C4 may be determined by using switch-on duration of the eighth switch 38 and switch-off duration of the seventh switch 37. In this case, the voltage of the first output end Vo1 of the LDO 41 is still equal to the voltage output by the boost circuit 42.

Next, in a second phase in which the boost circuit 42 performs voltage step-up, the seventh switch 37 is switched on, and the eighth switch 38 is switched off. In this case, due to a current retention feature of the second inductor L2, a current flowing through the second inductor L2 in the discharging process of the fourth capacitor C4 does not immediately change to zero, but slowly changes to zero from the value when the charging is complete. However, because the eighth switch 38 is switched off, the second inductor L2 can discharge only through the seventh switch 37, and charge the fifth capacitor C5 in the discharging process. A voltage between the two ends of the fifth capacitor C5 (namely, a voltage output by the boost circuit 42) increases. In this case, the voltage is already higher than the voltage of the first output end Vo1 of the LDO 41, so that a voltage step-up process is implemented.

The boost circuit 42 formed by the seventh switch 37, the eighth switch 38, the fourth capacitor C4, the fifth capacitor C5, and the second inductor L2 steps up the battery voltage Uo to generate the second voltage V2, and supplies the second voltage V2 to the load circuit 20.

In a process in which the boost circuit 42 performs the foregoing voltage step-up operation, the first transistor S1 in the first switch 31 can be controlled to be cut off, and the second switch 32 is controlled to be switched off. For example, a gating signal is input to the gate g of the first transistor S1 in the first switch 31, to control the first transistor S1 to be cut off. A gating signal is input to the gate g of the second transistor S2 in the second switch 32, to control the second transistor S2 to be cut off, to switch off the second switch 32.

In addition, after the boost circuit 42 performs the foregoing voltage step-up operation to generate the second voltage V2, the second switch 32 may be switched on. For example, a gating signal is input to the gate g of the second transistor S2 in the second switch 32, to control the second transistor S2 to be conducted, so that the second switch 32 is switched on. It can be learned from the foregoing that the first end (the drain d of the first transistor S1) of the first switch 31 is also coupled to the load circuit 20, and the first switch 31 has a unidirectional switch-off function. Therefore, when the second voltage V2 stepped up by the boost circuit 42 is transmitted to the load circuit 20 through the second switch 32, a voltage of the drain d of the first transistor S1 in the first switch 31 is greater than a voltage of the source s of the first transistor S1, so that the first diode D1 in the first switch 31 is in a cut-off state. In this case, because the first transistor S1 has been cut off, the entire first switch 31 is in a switch-off state. The battery voltage U_{O} of the battery 13 cannot be transmitted to the load circuit 20 through the first switch 31.

In this way, in a low-temperature environment and when the battery 13 is aged, although the battery voltage U_{O} decreases, under a boost action of the boost circuit 42, the stepped-up voltage can still drive the load circuit 20 to work, thereby mitigating a problem that an endurance capability of the battery 13 of the terminal 01 is obviously insufficient in a low-temperature use environment or after the battery 13 is aged.

In addition, as described above, in a low-temperature environment or when the battery is aged, before S104, for example, before the boost circuit 42 steps up the battery voltage Uo, the power supply method further includes: The main control module 200 may lower the undervoltage protection voltage V0 of the battery 13, so that a lowered undervoltage protection voltage V0 is always less than the current discharge cut-off voltage Voff of the battery 13. A technical effect of adjusting the undervoltage protection voltage V0 is the same as that described above, and details are not described herein again.

### Example 4

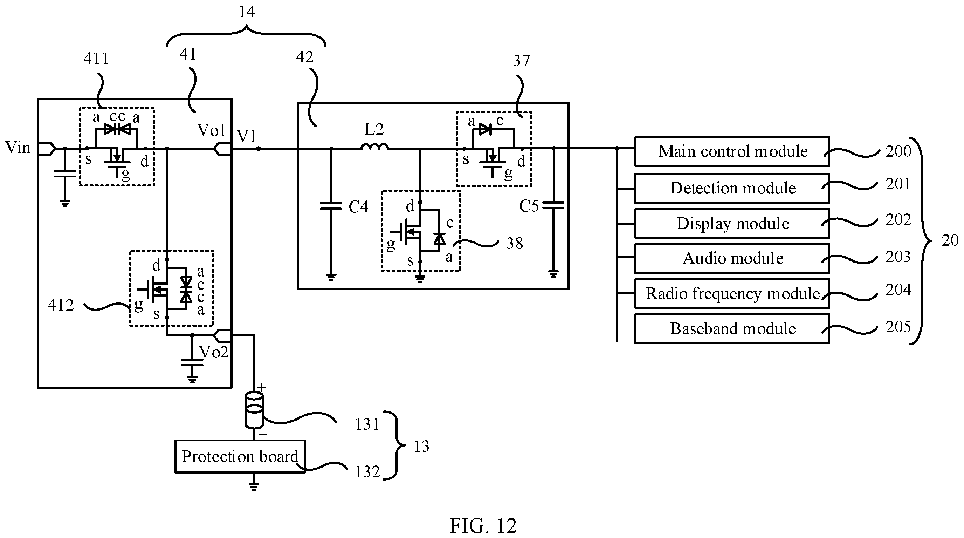

As shown in FIG. 12, a charging and discharging management circuit 14 in a terminal 01 provided in this example may include an LDO 41 and a boost circuit 42. The LDO 41 is coupled to a battery 13. The boost circuit 42 is coupled to the LDO 41 and a load circuit 20. The boost circuit 42 has a structure the same as that in Example 3, and may include: a second inductor L2, a seventh switch 37, an eighth switch 38, a fourth capacitor C4, and a fifth capacitor C5. A connection manner of components in the boost circuit 42 is the same as that described above, and details are not described herein again.

Based on the circuit structure shown in FIG. 12, the following describes a working mode of the terminal 01 in detail by using an example.

In a first working mode of the terminal 01, the terminal 01 needs to be charged. In this working mode, a power supply method for the terminal 01 includes the following steps.

First, the terminal 01 is coupled to an external power supply network (such as 220 V) or an external charger by using a data line 03 and an adapter 02. As described above, the adapter 02 may convert a voltage of 220 V into a direct-current voltage (for example, 5 V or 9 V). The direct-current voltage may be used as an input voltage of an input end Vin of the LDO 41.

Next, a voltage stabilizing switch 411 and a battery control switch 412 in the LDO 41 are switched on. A switch-on manner is the same as that described above, and details are not described herein again. The LDO 41 steps down, to a first voltage V1, the input voltage received by the input end Vin. Then, the seventh switch 37 in the boost circuit 42 is switched on, so that the LDO 41 steps down, to the first voltage V1 (for example, 4.4 V), the input voltage (for example, 5 V or 9 V) received by using the input power supply Vin, and provides the first voltage V1 to the battery 13.

For another example, in a second working mode of the terminal 01, the battery 13 in the terminal 01 supplies power to the load circuit 20. In this working mode, a power supply method for the terminal 01 includes the following steps.

First, the battery control switch 412 is switched on. A switch-on manner is the same as that described above, and details are not described herein again. Then, a main control module 200 may detect whether a battery voltage Uo output by the battery 13 to the load circuit 20 is greater than a threshold voltage Vth of the battery 13. When the battery voltage Uo is greater than the threshold voltage Vth of the battery 13, the seventh switch 37 in the boost circuit 42 may be switched on. For example, a gating signal is input to a gate g of a transistor in the seventh switch 37, to control the transistor to be conducted, so that the battery 13 may supply a voltage to the load circuit 20 through the battery control switch 412 in the LDO 41 and then by using the transistor in the seventh switch 37.

As described above, the first working mode and the second working mode of the terminal 01 in this example may be simultaneously performed. For example, when the battery 13 in the terminal 01 is charged by using an external charger, the terminal 01 may run the foregoing relatively large program.

For another example, in a third working mode of the terminal 01, when the terminal 01 works in a low-temperature environment, or the battery of the terminal 01 is aged, the battery voltage Uo of the battery 13 supplies power to the load circuit 20 through voltage step-up performed by the voltage conversion circuit 30. In this working mode, a power supply method for the terminal 01 includes the following steps.

First, a detection module 201 performs detection. For example, in some embodiments of this application, the detection module 201 may be the foregoing temperature sensor. The detection module 201 detects an ambient temperature of the terminal 01, and transmits a detection result to the main control module 200. Alternatively, the detection module 201 may be the foregoing power metering chip, which detects a quantity of charging and discharging cycles of the battery 13 and transmits a detection result to the main control module 200.

Next, whether the terminal 01 is in a low-temperature environment or whether the battery 13 is aged is determined.

When the terminal 01 is not in a low-temperature environment, or the battery 13 is not aged, the battery 13 supplies power to the load circuit 20 through the first switch 31. However, when the terminal 01 is in a low-temperature environment or the battery 13 is aged, it may be first determined whether a discharge current I_{O} of the battery 13 is greater than or equal to a threshold current Ith. When the discharge current I_{O} of the battery 13 is greater than or equal to the threshold current Ith, it is then determined whether the battery voltage Uo decreases to the threshold voltage Vth.

Next, when the battery voltage U_{O} decreases to the threshold voltage Vth, in the boost circuit 42, the eighth switch 38 and the seventh switch 37 are alternately switched on, and the boost circuit 42 steps up the battery voltage U_{O} of the battery 13 to obtain a second voltage V2. The second voltage V2 is used to drive the load circuit 20 to continue working. A voltage step-up process of the boost circuit 42 is the same as that described above, and details are not described herein again.

In this way, in a low-temperature environment and when the battery 13 is aged, although the battery voltage U_{O} decreases, under a boost action of the voltage conversion circuit 30, the stepped-up voltage can still drive the circuit 20 to work, thereby mitigating a problem that an endurance capability of the battery 13 of the terminal 01 is obviously insufficient in a low-temperature use environment or after the battery 13 is aged.

In addition, as described above, in a low-temperature environment or when the battery is aged, before the boost circuit 42 steps up the battery voltage U_{O}, the power supply method further includes: The main control module 200 may lower an undervoltage protection voltage V0 of the battery 13, so that a lowered undervoltage protection voltage V0 is always less than a current discharge cut-off voltage Voff of the battery 13. A technical effect of adjusting the undervoltage protection voltage V0 is the same as that described above, and details are not described herein again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A terminal, comprising:
a load circuit;
a battery, configured to supply a voltage to the load circuit; and
a charging and discharging management circuit, coupled to the load circuit and the battery, wherein the charging and discharging management circuit receives an input voltage, and charges the battery after stepping down the input voltage; when a battery voltage of the battery is greater than a threshold voltage, the battery supplies a voltage to the load circuit; and when the battery voltage decreases to the threshold voltage, the charging and discharging management circuit steps up the battery voltage, and outputs a stepped-up voltage to the load circuit; and
the threshold voltage is greater than a minimum working voltage of the load circuit.

2. The terminal according to claim 1, wherein the charging and discharging management circuit comprises:
a first switch, wherein a first end of the first switch is coupled to the load circuit, the first switch is configured to be switched on when the battery voltage is greater than the threshold voltage, and the first switch is further configured to be switched off when the battery voltage decreases to the threshold voltage;
a second switch, wherein a first end of the second switch is coupled to the load circuit, the second switch is configured to be switched off when the battery voltage is greater than the threshold voltage, and the second switch is further configured to be switched on when the battery voltage decreases to the threshold voltage; and
a voltage conversion circuit, coupled to the battery, a second end of the first switch, and a second end of the second switch, wherein the voltage conversion circuit is configured to step down the input voltage to a first voltage, and output the first voltage to the battery, to charge the battery; when the battery voltage is greater than the threshold voltage, the battery supplies a voltage to the load circuit by using the voltage conversion circuit and the first switch; and when the battery voltage decreases to the threshold voltage, the voltage conversion circuit steps up the battery voltage, and outputs a stepped-up voltage to the load circuit by using the second switch.

3. The terminal according to claim 2, wherein the first switch comprises a first transistor and a first diode;
a gate of the first transistor is configured to receive a gating signal, a first electrode of the first transistor is coupled to the load circuit, and a second electrode of the first transistor is coupled to the voltage conversion circuit; and
an anode of the first diode is coupled to the second electrode of the first transistor, and a cathode of the first diode is coupled to the first electrode of the first transistor.

4. The terminal according to claim 2 or 3, wherein the second switch comprises a second transistor and a second diode;
a gate of the second transistor is configured to receive a gating signal, a first electrode of the second transistor is coupled to the load circuit, and a second electrode of the second transistor is coupled to the voltage conversion circuit; and
an anode of the second diode is coupled to the first electrode of the second transistor, and a cathode of the second diode is coupled to the second electrode of the second transistor.

5. The terminal according to claim 4, wherein the second switch further comprises a third diode; and
an anode of the third diode is coupled to the second electrode of the second transistor, and a cathode of the third diode is coupled to the cathode of the second diode.

6. The terminal according to any one of claims 2 to 5, wherein the voltage conversion circuit comprises a third switch, a fourth switch, a fifth switch, a sixth switch, a first inductor, a first capacitor, a second capacitor, and a third capacitor;
a gating end of the third switch is configured to receive a gating signal, a first end of the third switch is configured to receive the input voltage and is coupled to a first end of the first capacitor, a second end of the third switch is coupled to a first end of the fourth switch, the second end of the second switch, and a first end of the second capacitor, and a second end of the first capacitor and a second end of the second capacitor are grounded;
a gating end of the fourth switch is configured to receive a gating signal, and a second end of the fourth switch is coupled to a first end of the first inductor;
a second end of the first inductor is coupled to a first end of the fifth switch, the second end of the first switch, and a first end of the third capacitor, and a second end of the third capacitor is grounded;
a gating end of the fifth switch is configured to receive a gating signal, and a second end of the fifth switch is coupled to the battery; and
a gating end of the sixth switch is configured to receive a gating signal, a first end of the sixth switch is coupled to the second end of the fourth switch, and a second end of the sixth switch is grounded.

7. The terminal according to claim 6, wherein the third switch comprises a third transistor, a fourth diode, and a fifth diode;
a gate of the third transistor is configured to receive a gating signal, a first electrode of the third transistor is configured to receive the input voltage, and a second electrode of the third transistor is coupled to the first end of the fourth switch and the second end of the second switch;
an anode of the fourth diode is coupled to the first electrode of the third transistor, and a cathode of the fourth diode is coupled to a cathode of the fifth diode; and
an anode of the fifth diode is coupled to the second electrode of the third transistor.

8. The terminal according to any one of claims 2 to 5, wherein the voltage conversion circuit comprises:
a low dropout regulator, coupled to the battery and the second end of the first switch, wherein the low dropout regulator is configured to: step down the input voltage to the first voltage and output the first voltage to the battery; and when the first switch is switched on and the second switch is switched off, output the first voltage to the load circuit; and
a boost circuit, coupled to the low dropout regulator and the second end of the second switch, wherein the boost circuit is configured to step up the battery voltage and output a stepped-up voltage to the load circuit by using the second switch.

9. The terminal according to claim 1, wherein the charging and discharging management circuit comprises:
a low dropout regulator, coupled to the battery, wherein the low dropout regulator is configured to step down the input voltage to a first voltage, and supply the first voltage to the battery; and
a boost circuit, coupled to the low dropout regulator and the load circuit, wherein the boost circuit is configured to: output the first voltage to the load circuit; when the battery voltage is greater than the threshold voltage, output the battery voltage to the load circuit; and when the battery voltage decreases to the threshold voltage, step up the battery voltage output by the battery, and output a stepped-up voltage to the load circuit.

10. The terminal according to claim 1, wherein the load circuit comprises a main control module and a detection module; and
the detection module is configured to detect an ambient temperature of the terminal; and the main control module is configured to: when it is determined that the ambient temperature is lower than a preset temperature, determine whether the battery voltage decreases to the threshold voltage; or
the detection module is coupled to the battery, and is configured to detect a quantity of charging and discharging cycles of the battery; and the main control module is configured to: when it is determined that the quantity of charging and discharging cycles is greater than a preset quantity of times, determine whether the battery voltage decreases to the threshold voltage.

11. The terminal according to claim 10, wherein
the main control module is further configured to detect a discharge current of the battery when it is determined that the ambient temperature is lower than the preset temperature or the quantity of charging and discharging cycles is greater than the preset quantity of times; and when the discharge current is greater than or equal to a threshold current, the main control module determines whether the battery voltage decreases to the threshold voltage.

12. The terminal according to claim 11, wherein
the main control module is further configured to lower an undervoltage protection voltage of the battery when it is determined that the ambient temperature is lower than the preset temperature or the quantity of charging and discharging cycles is greater than the preset quantity of times, and the battery voltage decreases to the threshold voltage, wherein the minimum working voltage of the load circuit is greater than a current discharge cut-off voltage of the battery, and the current discharge cut-off voltage of the battery is greater than a lowered undervoltage protection voltage.

13. The terminal according to claim 1, wherein the threshold voltage is less than a rated voltage of the battery.

14. A power supply method for a terminal, wherein the terminal comprises a load circuit, a battery, and a charging and discharging management circuit coupled to the load circuit and the battery; and the method comprises: receiving, by the charging and discharging management circuit, an input voltage, and charging the battery after stepping down the input voltage;
when a battery voltage is greater than a threshold voltage, supplying, by the battery, a voltage to the load circuit; and
when the battery voltage decreases to the threshold voltage, stepping up, by the charging and discharging management circuit, the battery voltage, and outputting a stepped-up voltage to the load circuit, wherein
the threshold voltage is greater than a minimum working voltage of the load circuit.

15. A charging and discharging management circuit, wherein the charging and discharging management circuit is configured to:
receive an input voltage, and charge a battery after stepping down the input voltage;
when a battery voltage is greater than a threshold voltage, be used by the battery to supply a voltage to a load circuit; and
when the battery voltage decreases to the threshold voltage, step up the battery voltage, and output a stepped-up voltage to the load circuit, wherein
the threshold voltage is greater than a minimum working voltage of the load circuit.

16. The charging and discharging management circuit according to claim 15, wherein the charging and discharging management circuit comprises:
a first switch, wherein a first end of the first switch is coupled to the load circuit, the first switch is configured to be switched on when the battery voltage is greater than the threshold voltage, and the first switch is further configured to be switched off when the battery voltage decreases to the threshold voltage;
a second switch, wherein a first end of the second switch is coupled to the load circuit, the second switch is configured to be switched off when the battery voltage is greater than the threshold voltage, and the second switch is further configured to be switched on when the battery voltage decreases to the threshold voltage; and
a voltage conversion circuit, coupled to the battery, a second end of the first switch, and a second end of the second switch, wherein the voltage conversion circuit is configured to step down the input voltage to a first voltage, and output the first voltage to the battery, to charge the battery; when the battery voltage is greater than the threshold voltage, the battery supplies a voltage to the load circuit by using the voltage conversion circuit and the first switch; and when the battery voltage decreases to the threshold voltage, the voltage conversion circuit steps up the battery voltage, and outputs a stepped-up voltage to the load circuit by using the second switch.

17. The charging and discharging management circuit according to claim 16, wherein the first switch comprises a first transistor and a first diode;
a gate of the first transistor is configured to receive a gating signal, a first electrode of the first transistor is coupled to the load circuit, and a second electrode of the first transistor is coupled to the voltage conversion circuit; and
an anode of the first diode is coupled to the second electrode of the first transistor, and a cathode of the first diode is coupled to the first electrode of the first transistor.

18. The charging and discharging management circuit according to claim 16 or 17, wherein the second switch comprises a second transistor and a second diode;
a gate of the second transistor is configured to receive a gating signal, a first electrode of the second transistor is coupled to the load circuit, and a second electrode of the second transistor is coupled to the voltage conversion circuit; and
an anode of the second diode is coupled to the first electrode of the second transistor, and a cathode of the second diode is coupled to the second electrode of the second transistor.

19. The charging and discharging management circuit according to any one of claims 16 to 18, wherein the voltage conversion circuit comprises a third switch, a fourth switch, a fifth switch, a sixth switch, a first inductor, a first capacitor, a second capacitor, and a third capacitor;
a gating end of the third switch is configured to receive a gating signal, a first end of the third switch is configured to receive the input voltage and is coupled to a first end of the first capacitor, a second end of the third switch is coupled to a first end of the fourth switch, the second end of the second switch, and a first end of the second capacitor, and a second end of the first capacitor and a second end of the second capacitor are grounded;
a gating end of the fourth switch is configured to receive a gating signal, and a second end of the fourth switch is coupled to a first end of the first inductor;
a second end of the first inductor is coupled to a first end of the fifth switch, the second end of the first switch, and a first end of the third capacitor, and a second end of the third capacitor is grounded;
a gating end of the fifth switch is configured to receive a gating signal, and a second end of the fifth switch is coupled to the battery; and
a gating end of the sixth switch is configured to receive a gating signal, a first end of the sixth switch is coupled to the second end of the fourth switch, and a second end of the sixth switch is grounded.

20. The charging and discharging management circuit according to claim 19, wherein the third switch comprises a third transistor, a fourth diode, and a fifth diode;
a gate of the third transistor is configured to receive a gating signal, a first electrode of the third transistor is configured to receive the input voltage, and a second electrode of the third transistor is coupled to the first end of the fourth switch and the second end of the second switch;
an anode of the fourth diode is coupled to the first electrode of the third transistor, and a cathode of the fourth diode is coupled to a cathode of the fifth diode; and
an anode of the fifth diode is coupled to the second electrode of the third transistor.
